(19) Europäisches Patentamt
European Patent Office
Office européen des brevets

(11) EP 1 370 621 B1

(12) # EUROPÄISCHE PATENTSCHRIFT

(45) Veröffentlichungstag und Bekanntmachung des Hinweises auf die Patenterteilung:
**01.12.2004 Patentblatt 2004/49**

(21) Anmeldenummer: **02724229.6**

(22) Anmeldetag: **14.03.2002**

(51) Int Cl.$^7$: **C09D 131/02**

(86) Internationale Anmeldenummer:
**PCT/EP2002/002817**

(87) Internationale Veröffentlichungsnummer:
**WO 2002/074856 (26.09.2002 Gazette 2002/39)**

(54) **WÄSSRIGE KUNSTSTOFF-DISPERSIONEN, VERFAHREN ZU DEREN HERSTELLUNG SOWIE DEREN VERWENDUNG**

AQUEOUS PLASTIC MATERIAL DISPERSIONS, METHOD FOR PRODUCING THE SAME AND USE THEREOF

DISPERSIONS AQUEUSES DE MATIERES PLASTIQUES, LEURS PROCEDES DE PRODUCTION ET LEUR UTILISATION

(84) Benannte Vertragsstaaten:
**AT BE CH CY DE DK ES FI FR GB GR IE IT LI LU MC NL PT SE TR**

(30) Priorität: **15.03.2001 DE 10112431**

(43) Veröffentlichungstag der Anmeldung:
**17.12.2003 Patentblatt 2003/51**

(73) Patentinhaber: **Celanese Emulsions GmbH
61476 Kronberg/Ts. (DE)**

(72) Erfinder:
- **HELDMANN, Carsten
55131 Mainz (DE)**
- **PETRI, Harald
65326 Aarbergen (DE)**
- **WIRTH, Thomas
63512 Hainburg (DE)**

(74) Vertreter: **Ackermann, Joachim, Dr.
Postfach 11 13 26
60048 Frankfurt am Main (DE)**

(56) Entgegenhaltungen:
**EP-A- 0 609 756**
**DE-A- 4 431 343**
**DE-A- 19 811 314**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 370 621 B1

Printed by Jouve, 75001 PARIS (FR)

## Beschreibung

Die vorliegende Erfindung betrifft wässrige Kunststoff-Dispersionen auf Basis von Vinylester-Copolymerisaten, die im wesentlichen durch ionische Komponenten stabilisiert sind, Verfahren zu deren Herstellung sowie deren Verwendung.

Kunststoff-Dispersionen werden als Bindemittel zur Herstellung sowohl pigmentierter als auch nicht pigmentierter, wässriger Zubereitungen, die z.B. als Beschichtungsmassen Verwendung finden, eingesetzt. Zu den pigmentierten Beschichtungsmassen zählen insbesondere Lasuren, Dispersionslacke, Dispersionsfarben, kunstharzgebundene Putze, Dichtungsmassen und Spachtelmassen, die eine breite Anwendung sowohl im Bautenschutz als auch im dekorativen Bereich finden. Zu den nicht pigmentierten Beschichtungsmassen zählen beispielsweise Klarlacke. Darüber hinaus stellen Kunststoff-Dispersionen die Hauptkomponente von wasserbasierenden Lebensmittelbeschichtungen dar, die das Substrat vor Austrocknung sowie schädlichen Umwelteinflüssen schützen sollen.

Die genannten Beschichtungsmittel lassen sich dabei je nach Anteil an Kunststoff-Dispersion in der gesamten Beschichtungszusammensetzung in zwei Klassen unterteilen. In die Klasse der unterkritisch formulierten Beschichtungszusammensetzungen, die eine Pigment-Volumen-Konzentration (PVK) unterhalb der sogenannten kritischen PVK aufweisen, lassen sich Lasuren, Dispersionslacke und Glanzfarben einordnen. Auf der anderen Seite stehen überkritische, pigmenthaltige Beschichtungsmassen, wie z.B. hochgefüllte Innenfarben oder kunstharzgebundene Putze. Diese weisen eine Pigment-Volumen-Konzentration oberhalb der kritischen Pigment-Volumen-Konzentration auf und werden mit einem deutlich niedrigeren Gehalt an polymerem Bindemittel formuliert. Dabei müssen diese beiden Klassen von Beschichtungszusammensetzungen einer Vielzahl von praktischen Anforderungen genügen. Beiden Klassen ist gemeinsam, dass neben einer guten Verarbeitbarkeit der wässrigen Zubereitungen auch bei niedrigen Verarbeitungstemperaturen, die Blockfestigkeit der getrockneten Beschichtungen sowie die Beständigkeit der Beschichtungen gegenüber abrasiver Beanspruchung zu den wichtigsten anwendungstechnischen Eigenschaften zählen.

Im Falle bindemittelreicher Beschichtungszusammensetzungen (niedrige PVK), deren Oberflächen durch einen hohen Anteil an polymerem Bindemittel gekennzeichnet sind, treten neben der Blockfestigkeit und Abriebbeständigkeit, zudem Glanzeigenschaften der getrockneten Beschichtungen in den Vordergrund.

Diesen Anforderungen an bindemittelreiche Beschichtungszusammensetzungen werden konventionelle Beschichtungsmassen auf Basis wässriger Kunststoff-Dispersionen gerecht, indem in der Regel ein Polymer mit höherer Glasübergangstemperatur (härteres Polymer) als Bindemittel eingesetzt wird und geringe Mengen an Filmbildehilfsmittel, wie z.B. organische Lösungsmittel (z.B. Kohlenwasserstoffe) und/oder Weichmacher (z.B. Phthalsäureester oder Glykolether) zugesetzt werden, um die Mindestfilmbildetemperatur (MFT), d.h. die Temperatur, oberhalb derer das Polymer in der Zubereitung verfilmt, herabzusetzen und eine Filmbildung des Polymeren auch bei niedrigeren Verarbeitungstemperaturen zu gewährleisten. Lösungsmittel und flüchtige Weichmacher werden beim Trocknen der Zubereitung freigesetzt, wodurch sich die mechanische Festigkeit der Beschichtung erhöht, bzw. die Oberflächenhärte und damit die Blockfestigkeit der Farbformulierung zunimmt. Die Freisetzung von flüchtigen, organischen Bestandteilen ist jedoch aufgrund ihres schädlichen Einflusses auf Mensch und Umwelt, insbesondere bei Applikationen in Innenräumen, nicht erwünscht.

Von daher bestand und besteht ein großer Bedarf an wässrigen Kunststoff-Dispersionen, die es erlauben, weichmacher- und lösungsmittelfreie Beschichtungssysteme mit hohen Bindemittelgehalten (niedrige PVK) und einer niedrigen Verfilmungstemperatur zu formulieren, die den gestellten Anforderungen hinsichtlich Blockfestigkeit, Glanz- und Abriebeigenschaften genügen.

Im Gegensatz zu den geforderten anwendungstechnischen Eigenschaften von bindemittelreichen Beschichtungssystemen, ist im Falle sogenannter hochgefüllter Beschichtungssysteme, die mit einem niedrigen Bindemittelanteil formuliert werden (hohe PVK), bedingt durch den hohen Anteil an Füllstoffen und Pigmenten an der Beschichtungsoberfläche üblicherweise eine ausreichende Blockfestigkeit gegeben. Stattdessen tritt als anwendungstechnische Eigenschaft für diese Beschichtungssysteme vor allem die Widerstandsfähigkeit der getrockneten Beschichtungen gegenüber abrasiven Belastungen (Abriebbeständigkeit) in den Vordergrund.

Wie im Falle konventioneller, bindemittelreicher Beschichtungsmassen, werden die geforderten Eigenschaften bei konventionellen nochgefüllten Beschichtungsmassen dadurch gelöst, dass ein Polymer mit höherer Glasübergangstemperatur (härteres Polymer) als Bindemittel zusammen mit geringen Mengen eines Filmbildehilfsmittels eingesetzt wird, das allerdings wiederum beim Trocknen der Zubereitung in die Umwelt freigesetzt wird.

In Kombination mit Filmbildehilfsmitteln dienen Polymere mit höherer Glasübergangstemperatur somit als universelle Bindemittel zur Herstellung konventioneller Beschichtungsmassen mit hohen und niedrigen PVKs, die sich bei niedrigen Temperaturen verarbeiten lassen.

Angesichts dieser universellen Einsetzbarkeit konventioneller Bindemittelsysteme bestand und besteht über den Bedarf an wässrigen Kunststoff-Dispersionen hinaus, die es erlauben, weichmacher- und lösungsmittelfreie Beschichtungssysteme mit niedrigen PVKs und einer niedrigen Verfilmungstemperatur zu formulieren, die den gestellten

Anforderungen hinsichtlich Blockfestigkeit, Glanz- und Abriebeigenschaften genügen, zudem ein großer Bedarf an universell einsetzbaren, wässrigen Kunststoff-Dispersionen, die es erlauben, weichmacher- und lösungsmittelfreie Beschichtungssysteme sowohl mit hohen als auch mit niedrigen PVKs und einer niedrigen Verfilmungstemperatur zu formulieren, die den gestellten Anforderungen hinsichtlich Blockfestigkeit, Glanzeigenschaften und Abriebbeständigkeit genügen.

Aus der DE-A-198 11 314 sind mehrstufige Acrylester-Dispersionen bekannt, die Itaconsäure als saures Comonomer enthalten und vorzugsweise mit anionischen Emulgatoren, bzw. mit Mischungen aus anionischen und nichtionischen Emulgatoren als Stabilisatoren hergestellt werden. Die beschriebenen Bindemittel zeigen vorteilhafte Nassabriebfestigkeiten und Blockfestigkeiten allerdings nur in weichmacherhaltigen Farbformulierungen mit einer niedrigen PVK von 46,9 %.

In der EP-A-0 347 760 wird der Einsatz spezieller Sulfobemsteinamidsalze als Nachgabe und/oder als Stabilisatoren während der Polymerisation von Acrylester- und Styrol/Acrytester-Dispersionen empfohlen. Mit den so erhaltenen Bindemitteln lassen sich weichmacherhaltige Glanzlacke mit hoher Blockfestigkeit herstellen. Dagegen zeigen alle anderen untersuchten ionischen Emulgatoren keine Wirkung.

In der EP-A-0 609 756 werden mehrstufige Acrylester-, Styrol/Acrylester- und Vinyl/Acrylester-Dispersionen offenbart, wobei eine der Polymerphasen eine Glasübergangstemperatur im Bereich von -55 bis -5°C und eine weitere Polymerphase eine Glasübergangstemperatur im Bereich von 0 bis 50°C aufweisen muss. Zur Herstellung dieser Dispersionen werden bevorzugt mindestens ein anionischer Emulgator und optional mindestens ein nichtionischer Emulgator verwendet. In den Beispielen werden Stabilisierungssysteme bestehend aus nichtionischen und ionischen Emulgatoren im Verhältnis von ca. 1:1 offenbart. Sie zeigen, dass die mit den erfindungsgemäßen Bindemitteln formulierten lösungsmittelfreien Semi-gloss-, Satin- und Silk-Farben-Beispiele Blockfestigkeiten aufweisen, die mit lösungsmittelhaltigen Systemen vergleichbar sind, was durch das Vorliegen von zwei Polymerphasen mit den speziellen Glasübergangstemperatur-Bereichen erreicht wird.

In der EP-A-1 018 835 werden lösungsmittelfreie Beschichtungszusammensetzungen mit verbesserter Blockfestigkeit beschrieben, die als Bindemittel eine Mischung aus einer Acrylester- und einer Vinylester-Copolymer-Dispersion enthalten. Kennzeichen der in der Dispersionsmischung im Unterschuss eingesetzten Acrylesterkomponente ist neben der notwendigen Copolymerisation sterisch gehinderter Silane die Verwendung mindestens eines anionischen Emulgators während der Herstellung dieser Dispersionskomponente zur Erzielung der gewünschten hohen Blockfestigkeiten der mit diesen Bindemitteln hergestellten Beschichtungszusammensetzungen. Die ausschließliche Verwendung nichtionischer Tenside bei der Herstellung der Acrylesterkomponente führt nach Lehre dieser Schrift zu ungenügenden Blockfestigkeiten. Im Gegensatz dazu hat die Natur des Emulgators, der bei der Herstellung der im Überschuss eingesetzten Vinylester-Komponente verwendet wird, keinen Einfluss auf die Blockfestigkeit der resultierenden Beschichtungen.

Vinylester-Dispersionen mit heterogener Morphologie werden in einer Reihe von Patentanmeldungen beschrieben.

So werden in der DE-A-198 53 461 schutzkolloidstabilisierte Copolymerisat-Latexteilchen mit heterogener Morphologie offenbart, die aus einer harten und einer weichen Polymerphase aufgebaut sind, wobei die bevorzugten Glasübergangstemperaturen der einzelnen Phasen -40 bis +20°C, bzw. +20. bis +35°C betragen. Die Emulsionspolymerisation zur Herstellung dieser Dispersionen, aus denen nach ihrer Trocknung Dispersionspulver hergestellt werden, schreibt die Verwendung von Schutzkolloiden vor. Der Einsatz von oberflächenaktiven Substanzen, wie z.B. Emulgatoren, kann gegebenenfalls erfolgen. Ebenfalls offenbart wird die Verwendung der Copolymerisat-Laiexteilchen als Bindemittel in Dispersionsfarben und Putzen.

In der DE-A-197 39 936 werden im wesentlichen mit Polyvinylalkohol als Schutzkolloid stabilisierte, weichmacherfreie, heterogene Vinylacetat-Ethen-Dispersionen offenbart, die durch Saatpolymerisation eines Copolymerisats A mit einer Glasübergangstemperatur > 20°C in Gegenwart einer Saatgrundlage aus einem Copolymerisat B mit einer Glasübergangstemperatur < 20°C hergestellt werden.

Die zuvor in der DE-A-198 53 461 und der DE-A-197 39 936 beschriebenen Dispersionen werden im wesentlichen durch Schutzkolloide stabilisiert. Durch den damit verbundenen hohen Gehalt an wasserlöslichen, leicht quellbaren, polymeren Stabilisatoren ist im Falle von Beschichtungszusammensetzungen, die diese Dispersionen als Bindemittel enthalten, mit einer hohen Wasseraufnahme der Beschichtung zu rechnen, was zu einer geringen Abriebbeständigkeit bei abrasiver Belastung im gequollenen Zustand führt.

In der EP-A-0 444 827 werden Vinylester-Ethen-Acrylester-Dispersionen mit Kern-Schale-Struktur beschrieben, wobei die Zusammensetzung der Polymerphasen von Kern und Schale so gewählt wird, dass das Copolymer nur eine Glasübergangstemperatur im Bereich von -30 bis 0°C aufweist. Durch die gleichermaßen vorgeschriebene Copolymerisation von Vinylsilan werden Dispersionen erhalten, die sich als vorteilhafte Bindemittel für rissüberbrückende Beschichtungsmittel eignen. Die niedrige Glasübergangstemperatur des Kern-Schale-Copolymers schließt den Einsatz dieser weichen Copolymer-Dispersionen als Bindemittel zur Formulierung blockfester, bindemittelreicher Beschichtungszusammensetzungen allerdings aus.

Eine Aufgabe der vorliegenden Erfindung war es daher, die Nachteile der bekannten, heterogenen Vinylester-Dispersionen zu überwinden, insbesondere die unzureichende Blockfestigkeit der mit diesen Dispersionen formulierten, bindemittelreichen Beschichtungszusammensetzungen, und neue Vinylester-Dispersionen zur Verfügung zu stellen, die es erlauben weichmacher- und lösemittelfreie Beschichtungszusammensetzungen mit einem hohen Bindemittelanteil zur Verfügung zu stellen (z.B. Beschichtungszusammensetzungen mit einer PVK kleiner der kritischen PVK), die bei niedrigen Temperaturen rissfreie Beschichtungsfilme bilden und sich durch eine verbesserte Blockfestigkeit auszeichnen.

Überraschenderweise wurde nun gefunden, dass sich, entgegen den Aussagen des Standes der Technik, die Zusammensetzung des Stabilisierungssystems von Vinylester-Dispersionen deutlich auf die Blockfestigkeit von Beschichtungen auswirkt, die auf diesen Bindemitteln basieren. Entsprechend wird die Aufgabe der vorliegenden Erfindung dadurch gelöst, dass heterogene Kunststoff-Dispersionen auf Basis von Vinylester-Copolymerisaten bereitgestellt werden, die im wesentlichen durch ionische Komponenten stabilisiert sind.

Gegenstand der vorliegenden Erfindung ist somit eine wässrige Kunststoff-Dispersion auf Basis eines Vinylester-Copolymerisats P erhältlich durch mehrstufige Emulsionspolymerisation mit einem Feststoffgehalt von bis zu 80 Gew.-% und einer Mindestfilmbildetemperatur unterhalb von 20°C, die im wesentlichen durch ionische Komponenten stabilisiert ist, wobei das Vinylester-Copolymerisat P mindestens ein Homo- oder Copolymerisat A und mindestens ein Homo- oder Copolymerisat B, vorzugsweise mindestens ein Copolymerisat A und mindestens ein Copolymerisat B und besonders bevorzugt ein Copolymerisat A und ein Copolymerisat B, enthält, und wobei

- das Homo- oder Copolymerisat A eine Glasübergangstemperatur im Bereich von 0 bis 20°C und das Homo- oder Copolymerisat B eine Glasübergangstemperatur im Bereich von 20 bis 50°C aufweist, vorausgesetzt, dass sich die Glasübergangstemperaturen der beiden Homooder Copolymerisate A und B um mindestens 10 K unterscheiden,
- die Summe der Anteile der Homo- oder Copolymerisate A und B im Vinylester-Copolymerisat P mindestens 50 Gew.-%, bezogen auf das Copolymerisat P, beträgt,
- das Gewichtsverhältnis von Homo- oder Copolymerisat A zu Homo- oder Copolymerisat B im Bereich von 95/5 bis 5/95 liegt und .
- die Homo- oder Copolymerisate A und B unabhängig voneinander

  (a) 50 bis 100 Gew.-% mindestens eines Vinylesters von Carbonsäuren mit 1 bis 18 C-Atomen (M1) und
  (b) 0 bis 25 Gew.-% mindestens eines monoethylenisch ungesättigten, gegebenenfalls halogen-substituierten Kohlenwasserstoffs mit 2 bis 4 C-Atomen (M2), im folgenden auch Monoolefin mit 2 bis 4 C-Atomen genannt, bezogen auf die Gesamtmasse der zur Herstellung des jeweiligen Homo- oder Copolymerisats A und B verwendeten Monomere, copolymerisiert enthalten,
  die dadurch gekennzeichnet ist, dass sie
  bezogen auf die Gesamtmasse der zur Herstellung des Vinylester-Copolymerisats P verwendeten Monomere

- 0 bis 10 Gew.-% mindestens eines ethylenisch ungesättigten, ionischen Monomeren (M3) und
- 0 bis 5 Gew.-% an ionischen Emulgatoren (S1) enthält, wobei
- die Gesamtmasse an ethylenisch ungesättigten, ionischen Monomeren (M3) und ionischen Emulgatoren (S1) mindestens 2 Gew.-% beträgt.

Unter dem Begriff Feststoffgehalt wird in der vorliegenden Anmeldung die Gesamtmasse an Copolymerisat, bezogen auf die Gesamtmasse der Dispersion, verstanden. Der Feststoffgehalt der erfindungsgemäßen Kunststoff-Dispersionen liegt vorzugsweise im Bereich von 20 bis 80 Gew.-%, besonders bevorzugt im Bereich von 40 bis 70 Gew.-% und insbesondere im Bereich von 45 bis 60 Gew.-%.

Die Summe der Anteile der Homo- oder Copolymerisate A und B im Vinylester-Copolymerisat P beträgt vorzugsweise 75 bis 100 Gew.-%, besonders bevorzugt 80 bis 100 Gew.-% und insbesondere 85 bis 100 Gew.-%, bezogen auf die Gesamtmasse des Copolymerisats P.

Das Gewichtsverhältnis von Homo- oder Copolymerisat A zu Homo- oder Copolymerisat B liegt vorzugsweise im Bereich von 90/10 bis 10/90, besonders bevorzugt im Bereich von 80/20 bis 20/80 und insbesondere im Bereich von 70/30 bis 30/70.

Die Größe der Homo- oder Copolymerisat-Partikel der erfindungsgemäßen Dispersionen können in weiten Bereichen variieren. Der mittlere Teilchendurchmesser sollte jedoch vorzugsweise 1000 nm und besonders bevorzugt 600 nm nicht überschreiten. Im Hinblick auf optimale Beschichtungseigenschaften sollten die durchschnittlichen Partikeldurchmesser insbesondere kleiner als 350 nm sein. Im Falle von Bindemittel-Dispersionen mit hohen Feststoffgehalten von mehr als 60 Gew.-%, bezogen auf das Gesamtgewicht der Bindemitteldispersion, ist es jedoch aus Gründen der Viskosität besonders bevorzugt, wenn der mittlere Teilchendurchmesser größer als 140 nm ist.

Die erfindungsgemäßen Kunststoff-Dispersionen weisen vorzugsweise einen pH-Wert auf, der im Bereich von 2 bis 9 und besonders bevorzugt im Bereich von 3 bis 7 liegt.

Die Mindestfilmbildetemperatur der erfindungsgemäßen, heterogenen Vinylester-Dispersionen liegen unterhalb von 20°C. Vorzugsweise liegt die Mindestfilmbildetemperatur unterhalb von 10°C, besonders bevorzugt unterhalb von 5°C und insbesondere unterhalb von 0°C.

Bei den Vinylester-Copolymerisat Partikeln der erfindungsgemäßen Dispersionen handelt es sich in einer bevorzugten Ausführungsform der vorliegenden Erfindung im weitesten Sinne um Mehrstufen-Polymerisate mit mindestens einer weichen Polymerphase (d.h. niedrige Tg) und mindestens einer harten Polymerphase (d.h. hohe Tg), die beispielsweise durch mehrstufige Emulsionspolymerisation hergestellt werden können, wobei die Polymerisation der nachfolgenden Stufe(n) in Gegenwart der zuvor gebildeten Polymerisationsstufe(n) erfolgt. Besonders bevorzugt handelt es sich bei den mehrstufigen Polymerisationsprozessen, durch die sich die erfindungsgemäßen Kunststoff-Dispersionen herstellen lassen, um zweistufige Prozesse.

Die Glasübergangstemperaturen der Homo- oder Copolymerisate A und B werden in der vorliegenden Anmeldung nach der Gleichung von Fox (T.G. Fox, Bull. Am. Phys. Soc. (Ser. II) 1, 123 [1956] und Ullmann's Enzyklopädie der technischen Chemie, Weinheim (1980), Band 19, S. 17-18) berechnet, gemäß der für die Glasübergangstemperatur Tg von Mischpolymerisaten bei großen Molmassen in guter Näherung die Gleichung

$$\frac{1}{T_g} = \frac{X^1}{T_g{}^1} + \frac{X^2}{T_g{}^2} + .... \frac{X^n}{T_g{}^n}$$

gilt, wobei $X^1$, $X^2$, ..., $X^n$ die Massenbrüche 1,2, ...,n und $T_g{}^1$, $T_g{}^2$, ... $T_g{}^n$ die Glasübergangstemperaturen der jeweils nur aus einem der Monomeren 1,2,...,n aufgebauten Polymeren in Grad Kelvin bedeuten. Letztere sind z.B. aus Ullmann's Enzyclopädia of Industrial Chemistry, VCH Weinheim, Vol. A 21 (1992) S. 169 oder aus Brandrup, E.H. Immergut Polymer Handbook 3rd ed, J. Wiley, New York 1989 bekannt, wie z.B. die Glasübergangstemperatur des Ethen-Homopolymerisats von 148 K (siehe Brandrup, E.H. Immergut Polymer Handbook 3rd ed, J. Wiley, New York 1989, S. VI/214) und die Glasübergangstemperatur des Vinylacetat-Homopolymerisats von 315 K (siehe Ullmann's Enzyclopädia of Industrial Chemistry, VCH Weinheim, Vol. A 21 (1992) S. 169). Im Rahmen einer vereinfachten Berechnung der Glasübergangstemperaturen ist es möglich, lediglich die hauptsächlich zur Bildung der Phasen beitragenden Haupt-Monomere (M1) und (M2) zu berücksichtigen und die Beiträge weiterer Monomere, die aus Massenbrüchen von weniger als 2 Gew.-% resultieren, zu vernachlässigen, solange die Gesamtsumme der Massenbrüche dieser Monomere 4 Gew.-% nicht überschreitet.

Als Vinylester von Carbonsäuren mit 1 bis 18 Kohlenstoffatomen (M1) können alle dem Fachmann bekannten Monomere eingesetzt werden. Bevorzugt sind Vinylester von Carbonsäuren mit 1 bis 8 Kohlenstoffatomen, wie zum Beispiel Vinylformiat, Vinylacetat, Vinylpropionat, Vinylisobutyrat, Vinylpivalat und Vinyl-2-ethylhexanoat; Vinylester von gesättigten, verzweigten Monocarbonsäuren mit 9, 10 oder 11 Kohlenstoffatomen im Säurerest (®Versaticsäuren); Vinylester von längerkettigen, gesättigten und ungesättigten Fettsäuren, wie zum Beispiel Vinyllaurat und Vinylstearat; Vinylester der Benzoesäure oder der p-tert.-Butylbenzoesäure sowie Gemische derselben. Besonders bevorzugt sind jedoch Vinylester von Carbonsäuren mit 1 bis 4 Kohlenstoffatomen, Gemische aus Vinylacetat und mindestens einer Versaticsäure sowie Gemische aus Vinylacetat und Vinyllaurat. Insbesondere bevorzugt ist Vinylacetat.

Beispiele für monoethylenisch ungesättigte, gegebenenfalls halogen-substituierte Kohlenwasserstoffe mit 2 bis 4 Kohlenstoffatomen (M2), im folgenden auch als Monoolefine mit 2 bis 4 Kohlenstoffatomen bezeichnet, sind Ethen, Propen, 1-Buten, 2-Buten, Isobuten, Vinylchlorid und Vinylidenchlorid, wobei Ethen und Gemische aus Ethen und Vinylchlorid bevorzugt sind. Der Anteil an diesen Monomeren (M2) im Vinylester-Copolymerisat P beträgt, bezogen auf die Gesamtmasse der zur Herstellung des Vinylester-Copolymerisats P verwendeten Monomere, vorzugsweise weniger als 20 Gew.-%.

Bevorzugte Monomergemische aus den Monomeren M1 und M2 zur Herstellung der erfindungsgemäßen Copolymerisate A und B sind Vinylacetat/Vinylchlorid/Ethen, Vinylacetat/Vinyllaurat/Ethen, Vinylacetat/Vinyllaurat/Ethen/Vinylchlorid, Vinylacetat/Versaticsäurevinylester/Ethen/Vinylchlorid, Versaticsäurevinylester/Ethen/Vinylchlorid, Vinylacetat/Versaticsäurevinylester/Ethen und Vinylacetat/Ethen, wobei die Kombination Vinylacetat/Ethen besonders bevorzugt ist.

Unter ethylenisch ungesättigten, ionischen Monomeren (M3) werden in der vorliegenden Anmeldung vorzugsweise solche ethylenisch ungesättigten Monomere verstanden, die eine Wasserlöslichkeit von mehr als 50 g/l, vorzugsweise mehr als 80 g/l, bei 25°C und 1 bar aufweisen und die in verdünnter wässriger Lösung bei pH 2 und/oder pH 11 zu mehr als 50 %, vorzugsweise mehr als 80 %, als ionische Verbindung vorliegen oder aber bei pH 2 und/oder pH 11 durch Protonierung oder Deprotonierung zu mehr als 50 %, vorzugsweise mehr als 80 %, in eine ionische Verbindung transformiert werden.

Als ethylenisch ungesättigte, ionische Monomere (M3) sind solche Verbindungen geeignet, die mindestens

eine Carbonsäure-, eine Sulfonsäure-, eine Phosphorsäure- oder eine Phosphonsäuregruppe in direkter Nachbarschaft zur Doppelbindungseinheit tragen oder aber über einen Spacer mit dieser verbunden sind. Als Beispiele seien genannt: $\alpha,\beta$-ungesättigte $C_3$-$C_8$-Monocarbonsäuren, $\alpha,\beta$-ungesättigte $C_5$-$C_8$-Dicarbonsäuren sowie deren Anhydride, und Halbester von $\alpha,\beta$-ungesättigten $C_4$-$C_8$-Dicarbonsäuren.

Bevorzugt sind ungesättigte Monocarbonsäuren, wie z.B. Acrylsäure und (Meth)acrylsäure sowie deren Anhydride; ungesättigte Dicarbonsäuren, wie z.B. Maleinsäure, Fumarsäure, Itaconsäure und Citraconsäure sowie deren Halbester mit $C_1$-$C_{12}$-Alkanolen wie Monomethylmaleinat und Mono-n-butylmaleinat. Weitere bevorzugte, ethylenisch ungesättigte, ionische Monomere (M3) sind ethylenisch ungesättigte Sulfonsäuren, wie z.B. Vinylsulfonsäure, 2-Acrylamido-2-methylpropansulfonsäure, 2-Acryloxy- und 2-Methacryloxyethansulfonsäure, 3-Acryloxy- und 3-Methacryloxypropansulfonsäure und Vinylbenzolsulfonsäure, sowie ethylenisch ungesättigte Phosphonsäuren, wie z.B. Vinylphosphonsäure.

Außerdem können neben den genannten Säuren auch deren Salze eingesetzt werden, vorzugsweise deren Alkalimetallsalze oder deren Ammoniumsalze und insbesondere deren Natriumsalze, wie beispielsweise die Natriumsalze der Vinylsulfonsäure und der 2-Acrylamidopropansulfonsäure.

Die genannten, ethylenisch ungesättigten, freien Säuren liegen in wässriger Lösung bei pH 11 überwiegend in Form ihrer konjugierten Basen in anionischer Form vor und lassen sich, wie die genannten Salze, als anionische Monomere bezeichnen.

Des Weiteren eignen sich als ethylenisch ungesättigte, ionische Monomere (M3) auch Monomere mit kationischer Funktionalität, wie beispielsweise auf quaternäre Ammoniumgruppen zurückgehende Monomere. Bevorzugt sind jedoch anionische Monomere.

Eine weitere Aufgabe der vorliegenden Erfindung war es, die Nachteile der bekannten, heterogenen Vinylester-Dispersionen zu überwinden, insbesondere die unzureichende Blockfestigkeit von mit diesen Dispersionen formulierten bindemittelreichen Beschichtungszusammensetzungen (z.B. Beschichtungszusammensetzungen mit einer PVK kleiner der kritischen PVK), wie auch die unzureichende Abnebbeständigkeit von mit diesen Dispersionen formulierten bindemittelarmen Beschichtungszusammensetzungen mit hohen Pigment/Füllstoffgehalten (z.B. Beschichtungszusammensetzungen mit einer PVK größer der kritischen PVK), und neue universell einsetzbare Vinylester-Dispersionen zur Verfügung zu stellen, die sich sowohl zur Herstellung bindemittelreicher Beschichtungssysteme mit verbesserter Blockfestigkeit, als auch zur Herstellung von bindemittelarmen Beschichtungszusammensetzungen mit hohen Pigment/Füllstoff-Gehalten eignen, die eine verbesserte Abriebbeständigkeit aufweisen.

Diese Aufgabe wird dadurch gelöst, dass das Vinylester-Copolymerisat P der erfindungsgemäßen Kunststoff-Dispersion zusätzlich bis zu 5 Gew.-%, vorzugsweise 0,05 bis 2 Gew.-% und besonders bevorzugt 0,1 bis 1,5 Gew.-%, bezogen auf die Gesamtmasse der zur Herstellung des Vinylester-Copolymerisats P eingesetzten Monomere, mindestens einer ungesättigten, copolymerisierbaren Silicium-organischen Verbindung (M4), im folgenden auch Silanverbindung genannt, copolymerisiert enthält.

Beispiele für die genannten Silicium-organischen Verbindungen sind Monomere der allgemeinen Formel $RSi(CH_3)_{0-2}(OR^1)_{3-1}$, wobei R die Bedeutung $CH_2{=}CR^2\text{-}(CH_2)_{0-1}$ oder $CH_2{=}CR^2CO_2\text{-}(CH_2)_{1-3}$ hat, $R^1$ ein unverzweigter oder verzweigter, gegebenenfalls substituierter Alkylrest mit 3 bis 12 C-Atomen ist, der gegebenenfalls durch eine Ethergruppe unterbrochen sein kann, und $R^2$ für H oder $CH_3$ steht.

Bevorzugt sind Silicium-organische Verbindungen der Formeln $CH_2{=}CR^2\text{-}(CH_2)_{0-1}Si(CH_3)_{0-1}(OR^1)_{3-2}$ und $CH_2{=}CR^2CO_2\text{-}(CH_2)_3Si(CH_3)_{0-1}(OR^1)_{3-2}$, wobei $R^1$ ein verzweigter oder unverzweigter Alkylrest mit 1 bis 8 C-Atomen ist und $R^2$ für H oder $CH_3$ steht.

Besonders bevorzugte Silicium-organische Verbindungen sind Vinylmethyldimethoxy-silan, Vinylmethyldiethoxy-silan, Vinylmethyl-di-n-propoxy-silan, Vinylmethyl-di-iso-propoxy-silan, Vinylmethyl-di-n-butoxy-silan, Vinylmethyl-di-sec.-butoxy-silan, Vinylmethyl-di-tert.-butoxy-silan, Vinylmethyl-di-(2-methoxyisopropyloxy)-silan und Vinylmethyl-dioctyloxy-silan.

Insbesondere bevorzugt sind Silicium-organische Verbindungen der Formel $CH_2{=}CR^2\text{-}(CH_2)_{0-1}Si(OR^1)_3$ und $CH_2{=}CR^2CO_2\text{-}(CH_2)_3Si(OR^1)_3$, wobei $R^1$ für einen verzweigten oder unverzweigten Alkylrest mit 1 bis 4 C-Atomen und $R^2$ für H oder $CH_3$ steht. Beispiele hierfür sind $\gamma$-(Meth)acryloxypropyl-tris-(2-methoxyethoxy)-silan, $\gamma$-(Meth)acryloxypropyl-tris-methoxy-silan, $\gamma$-(Meth)acryloxypropyl-tris-ethoxy-silan, $\gamma$-(Meth)acryloxypropyl-tris-n-propoxy-silan, $\gamma$-(Meth)acryloxypropyl-tris-iso-propoxysilan, $\gamma$-(Meth)acryloxypropyl-tris-butoxy-silan, $\gamma$-Acryloxypropyl-tris-(2-methoxyethoxy)-silan, $\gamma$-Acryloxypropyl-tris-methoxy-silan, $\gamma$-Acryloxypropyl-tris-ethoxy-silan, $\gamma$-Acryloxypropyl-tris-n-propoxy-silan, $\gamma$-Acryloxypropyl-tris-iso-propoxysilan, $\gamma$-Acryloxypropyl-tris-butoxy-silan, sowie Vinyl-tris-(2-methoxyethoxy)-silan, Vinyl-tris-methoxy-silan, Vinyl-tris-ethoxy-silan, Vinyl-tris-n-propoxy-silan, Vinyl-tris-iso-propoxy-silan und Vinyl-tris-butoxy-silan. Die genannten Silicium-organischen Verbindungen können gegebenenfalls auch in Form ihrer (Teil)hydrolysate eingesetzt werden.

Des weiteren kann das Vinylester-Copolymerisat P bis zu 5 Gew.-% an ethylenisch ungesättigten, nichtionischen Monomeren (M5), bezogen auf die Gesamtmasse der zur Herstellung des Vinylester-Copolymerisats P eingesetzten Monomere, copolymerisiert enthalten. Vorzugsweise liegt der Anteil an diesen Monomeren (M5) jedoch unter

2 Gew.-% und besonders bevorzugt unter 1 Gew.-%.

Unter ethylenisch ungesättigten, nichtionischen Monomeren (M5) werden in der vorliegenden Anmeldung vorzugsweise solche ethylenisch ungesättigten Verbindungen verstanden, die eine Wassertöslichkeit von mehr als 50 g/l, vorzugsweise mehr als 80 g/l, bei 25°C und 1 bar aufweisen und die in verdünnter wässriger Lösung bei pH 2 und pH 11 überwiegend in nichtionischer Form vorliegen.

Als ethylenisch ungesättigte, nichtionische Monomere (M5) bevorzugt sind sowohl die Amide der im Zusammenhang mit den ethylenisch ungesättigten, ionischen Monomeren (M3) genannten Carbonsäuren, wie beispielsweise (Meth)acrylamid und Acrylamid, sowie wasserlösliche N-Vinyllactame, wie beispielsweise N-Vinylpyrrolidon, als auch solche Verbindungen, die als ethylenisch ungesättigte Verbindungen kovalent gebundene Polyethylenglykoleinheiten enthalten, wie beispielsweise Polyethylenglykolmono- oder diallylether oder die Ester ethylenisch ungesättigter Carbonsäuren mit Polyalkylenglykolen.

Darüber hinaus kann das Vinylester-Copolymerisat P bis zu 30 Gew.-%, vorzugsweise bis zu 15 Gew.-% und besonders bevorzugt bis zu 10 Gew.-%. mindestens eines weiteren, ethylenisch ungesättigten Monomeren (M6), bezogen auf die Gesamtmasse der zur Herstellung des Vinylester-Copolymerisats P eingesetzten Monomere, copolymerisiert enthalten.

Bevorzugt als weitere, ethylenisch ungesättigte Monomere (M6) sind insbesondere die Ester ethylenisch ungesättigter $C_3$-$C_8$-Mono- und Dicarbonsäuren mit $C_1$-$C_{18}$-, vorzugsweise $C_1$-$C_{12}$- und besonders bevorzugt $C_1$-$C_8$-Alkanolen oder $C_5$-$C_8$-Cycloalkanolen. Geeignete $C_1$-$C_{18}$-Alkanole sind beispielsweise Methanol, Ethanol, n-Propanol, i-Propanol, 1-Butanol, 2-Butanol, i-Butanol, tert.-Butanol, n-Hexanol, 2-Ethylhexanol, Laurylalkohol und Stearylalkohol. Geeignete Cycloalkanole sind beispielsweise Cydopentanol und Cyclohexanol. Besonders bevorzugt sind die Ester der Acrylsäure, der (Meth)acrylsäure, der Crotonsäure, der Maleinsäure, der Itaconsäure, der Citraconsäure und der Fumarsäure. Insbesondere bevorzugt sind die Ester der Acrylsäure und/oder der (Meth)acrylsäure, wie z.B. der (Meth) acrylsäuremethylester, der (Meth)acrylsäure-ethylester, der (Meth)acrylsäureisopropylester, der (Meth)acrylsäure-n-butylester, der (Meth)acrylsäureisobutylester, der (Meth)acrylsäure-1-hexylester, der (Meth)acrylsäure-tert.-butylester, der (Meth)acrylsäure-2-ethythexylester, sowie die Ester der Fumarsäure und der Maleinsäure, wie z.B. der Fumarsäuredimethylester, der Maleinsäuredimethylester, der Maleinsäuredi-n-butylester, der Maleinsäuredi-noctylester und der Maleinsäuredi-2-ethylhexylester. Gegebenenfalls können die genannten Ester auch mit Epoxy- und/oder Hydroxylgruppen substituiert sein. Weiterhin kommen als weitere ethylenisch ungesättigte Monomere (M6) Nitrile $\alpha,\beta$-monoethylenisch ungesättigter $C_3$-$C_8$-Carbonsäuren, wie z.B. Acrylnitril und (Meth)acrylnitril in Frage. Auch können $C_4$-$C_8$-konjugierte Diene, wie z.B. 1,3-Butadien, Isopren und Chloropren als Monomere (M6) eingesetzt werden.

Eine partielle Substitution des Vinylester mit den genannten Verbindungen wird in der Regel durchgeführt, um die Eigenschaften der Homo- oder Copolymerisate A und/oder B, wie z.B. die Hydrophobie/Hydrophilie, einzustellen.

Des Weiteren können als weitere, ethylenisch ungesättigte Monomere (M6) auch solche Verbindungen eingesetzt werden, die bekanntermaßen die Haftungseigenschaften verbessern und/oder als Vernetzer wirken.

Zu den haftungsverbessemden Monomeren gehören sowohl Verbindungen, die eine an das Doppelbindungssystem kovalent gebundene Acetoacetoxy-Einheit aufweisen, als auch Verbindungen mit kovalent gebundenen Harnstoffgruppen. Zu den erstgenannten Verbindungen zählen insbesondere Acetoacetoxyethyl(meth)acrylat und Acetessigsäureallylester. Zu den harnstoffgruppenhaltigen Verbindungen gehören zum Beispiel N-Vinyl- und N-Allyl-Harnstoff sowie Derivate des Imidazolidin-2-ons, wie z.B. N-Vinyl- und N-Allylimidazolidin-2-on, N-Vinyloxyethylimidazolidin-2-on, N-(2-(Meth)acrylamidoethyl)imidazolidin-2-on, N-(2-(Meth)acryloxyethyl)imidazolidin-2-on und N-(2-(Meth)acryloxy-acetamidoethyl)imidazolidin-2-on, sowie weitere dem Fachmann bekannte Haftungsvermittler auf Basis von Harnstoff bzw. Imidazolidin-2-on. Zur Verbesserung der Haftung eignet sich auch Diacetonacrylamid in Kombination mit einer Nachgabe von Adipinsäuredihydrazid zur Dispersion. Die haftungsvermittelnden Monomere können gegebenenfalls in Mengen von 0,1 bis 10 Gew.-%, vorzugsweise von 0,5 bis 5 Gew.-%, bezogen auf die Gesamtmenge der zur Herstellung des Vinylester-Copolymerisats P verwendeten Monomere, eingesetzt werden. In einer bevorzugten Ausführungsform enthalten die Homo- oder Copolymerisate A und B jedoch keines dieser haftungsvermittelnden Monomere copolymerisiert.

Als vernetzende Monomere können sowohl bifunktionelle als auch polyfunktionelle Monomere eingesetzt werden. Beispiele hierfür sind Diallylphthalat, Diallylmaleinat, Triallylcyanurat, Tetraallyloxyethan, Divinylbenzol, Butandiol-1,4-di(meth)acrylat, Triethylenglykotdi(meth)acrylat, Divinyladipat, Allyl(meth)acrylat, Vinylcrotonat, Methylenbisacrylamid, Hexandioldiacrylat, Pentaerythroldiacrylat und Trimethylolpropantriacrylat. Die vemetzenden Monomere können gegebenenfalls in Mengen von 0,02 bis 5 Gew.-%, vorzugsweise von 0,02 bis 1 Gew.-%, bezogen auf die Gesamtmasse der zur Herstellung des Vinylester-Copolymerisats P verwendeten Monomere, eingesetzt werden. In einer bevorzugten Ausführungsform enthalten die Homo- oder Copolymerisate A und B jedoch keines dieser vemetzenden Monomere copolymerisiert.

Neben dem Vinylester-Copolymerisat P enthält die erfindungsgemäße, wässrige Kunststoff-Dispersion 0 bis 5 Gew.-%, vorzugsweise 0,1 bis 4 Gew.-%. besonders bevorzugt 1 bis 4 Gew.-% und insbesondere 2 bis 4 Gew.-%,

bezogen auf die Gesamtmasse der zur Herstellung des Vinylester-Copolymerisats P verwendeten Monomere, an ionischen Emulgatoren (S1). Zu den ionischen Emulgatoren zählen sowohl anionische als auch kationische Emulgatoren, wobei anionische Emulgatoren sowie Mischungen von anionischen Emulgatoren besonders bevorzugt sind.

Zu den anionischen Emulgatoren zählen Alkali- und Ammoniumsalze von Alkylsulfaten (Alkylrest: $C_6$ bis $C_{18}$), Alkylphosphonaten (Alkylrest: $C_6$ bis $C_{18}$), von Schwefelsäurehalbestern oder Phosphorsäuremono- und diestern ethoxylierter Alkanole (EO-Grad: 2 bis 50, Alkylrest: $C_6$ bis $C_{22}$) und ethoxylierter Alkylphenole (EO-grad: 3 bis 50, Alkylrest: $C_4$ bis $C_9$), von Alkylsulfonsäuren (Alkylrest: $C_{12}$ bis $C_{18}$), von Alkylarylsulfonsäuren (Alkylrest: $C_9$ bis $C_{18}$), von Sulfobernsteinsäurehalbestern und Sulfobernsteinsäurediestern von Alkanolen (Alkylrest: $C_6$ bis $C_{22}$) und ethoxylierten Alkanolen (EO-Grad: 2 bis 50, Alkylrest: $C_6$ bis $C_{22}$), sowie nicht-ethoxylierter und ethoxylierter Alkylphenole (EO-grad: 3 bis 50, Alkylrest: $C_4$ bis $C_9$). In der Regel werden die aufgeführten Emulgatoren als technische Gemische eingesetzt, wobei sich die Angaben zu Länge von Alkylrest und EO-Kette auf das jeweilige Maximum der in den Mischungen vorkommenden Verteilungen bezieht. Beispiele aus den genannten Emulgatorklassen sind ®Texapon K12 (Natriumlaurylsulfat von Cognis), ®Emulsogen EP ($C_{13}$-$C_{17}$-Alkylsulfonat von Clariant), ®Maranil A 25 IS (Natrium-n-Alkyl-($C_{10}$-$C_{13}$)-benzolsulfonat von Cognis), ®Genapol liquid ZRO (Natrium $C_{12}$/$C_{14}$-Alkylethersulfat mit 3 EO-Einheiten von Clariant), ®Hostapal BVQ-4 (Natriumsalz eines Nonylphenolethersulfats mit 4 EO-Einheiten von Clariant), ®Aerosol MA 80 (Natriumdihexylsulfosuccinat von Cyctec Industries), ®Aerosol A-268 (Dinatriumisodecylsulfosuccinat von Cytec Industries), ®Aerosol A-103 (Dinatriumsalz eines Halbesters der Sulfobernsteinsäure mit einem ethoxytierten Nonylphenol von Cytec Industries).

Weiterhin eignen sich Verbindungen der allgemeinen Formel I,

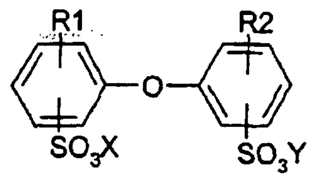

(I)

worin $R^1$ und $R^2$ Wasserstoff oder $C_4$-$C_{24}$-Alkyl, vorzugsweise $C_6$-$C_{16}$-Alkyl bedeuten und nicht gleichzeitig Wasserstoff sind, und X und Y Alkalimetallionen und/oder Ammoniumionen sind. Häufig werden auch im Falle dieser Emulgatoren technische Gemische verwendet, die einen Anteil von 50 bis 90 Gew.-% des monoalkylierten Produktes aufweisen, beispielsweise Dowfax® 2A1 ($R_1$ = $C_{12}$-Alkyl; DOW Chemical). Die Verbindungen sind allgemein bekannt, z.B. aus der US-A-4 269 749, und im Handel erhältlich.

Darüber hinaus eignen sich als ionische Emulgatoren auch besonders dem Fachmann bekannten Gemini-Tenside, wie sie beispielsweise in dem Aufsatz "Gemini-Tenside" von F.M. Menger und J. S. Keiper (Angew. Chem. 2000, S. 1980-1996) und den darin zitierten Publikationen beschrieben sind.

Zu den kationischen Emulgatoren zählen beispielsweise Alkylammoniumacetate (Alkylrest: $C_8$ bis $C_{12}$), quartäre, ammoniumgruppenhaltige Verbindungen und Pyridiniumverbindungen.

Selbstverständlich ist bei der Wahl der ionischen Emulgatoren darauf zu achten, dass Unverträglichkeiten in der resultierenden Kunststoff-Dispersion, die bis zur Koagulation führen können, auszuschließen sind. Deshalb werden bevorzugt anionische Emulgatoren in Kombination mit anionischen Monomeren (M3) oder kationische Emulgatoren in Kombination mit kationischen Monomeren (M3) eingesetzt, wobei die Kombinationen aus anionischen Emulgatoren und anionischen Monomeren besonders bevorzugt sind.

Neben den ionischen Emulgatoren kann die erfindungsgemäße, wässrige Kunststoff-Dispersion auch nichtionische Emulgatoren (S2) enthalten.

Geeignete nichtionische Emulgatoren (S2) sind araliphatische und aliphatische nichtionische Emulgatoren, beispielsweise ethoxylierte Mono-, Di- und Trialkylphenole (EO-Grad: 3 bis 50, Alkylrest $C_4$ bis $C_9$), Ethoxylate langkettiger, verzweigter oder unverzweigter Alkohole (EO-Grad: 3 bis 50, Alkylrest: $C_6$ bis $C_{36}$), sowie Polyethylenoxid/Polypropylenoxid-Blockcopolymere. Bevorzugt werden Ethoxylate langkettiger, verzweigter oder unverzweigter Alkanole (Alkylrest: $C_6$ bis $C_{22}$, mittlerer Ethoxylierungsgrad: 3 bis 50), und darunter besonders bevorzugt solche auf Basis von nativen Alkoholen, Guerbet-Alkoholen oder Oxoalkoholen mit einem linearen oder verzweigten $C_{12}$-$C_{18}$-Alkylrest und einem Ethoxylierungsgrad von 8 bis 50, eingesetzt.

Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208).

Darüber hinaus können sowohl ionische wie auch nichtionische Emulgatoren verwendet werden, die als zusätzliche Funktionalität eine oder mehrere ungesättigte Doppelbindungseinheiten enthalten und als ethylenisch ungesättigte, ionische Monomere (M3) bzw. als ethylenisch ungesättigte, nichtionische Monomere (M5) während des Polymerisationsprozesses in die entstehenden Polymerketten eingebaut werden können. Diese als copolymerisierbare

Emulgatoren ("Surfmers") bezeichnete Verbindungen sind dem Fachmann allgemein bekannt. Beispiele finden sich in einer Reihe von Veröffentlichungen (z.B.: "Reactive surfactants in heterophase polymerization" von A. Guyot et al. in Acta Polym. 1999, S. 57-66) und sind im Handel erhältlich (z.B. ®Emulsogen R 208 von Clariant oder Trem LF 40 von Cognis).

Darüber hinaus beträgt die Gesamtmasse an ionischen Emulgatoren (S1) und ethylenisch ungesättigten, ionischen Monomeren (M3), die zur Stabilisierung der Kunststoff-Dispersion eingesetzt werden, mindestens 2 Gew.-%, vorzugsweise mindestens 3 Gew.-%, bezogen auf die Gesamtmasse des Vinylester-Copolymerisats P.

In besonders bevorzugten Ausführungsformen der vorliegenden Erfindung wird auf nichtionische Komponenten, d.h. nichtionische Emulgatoren (S2) und nichtionische Monomere (M5), die ebenfalls zur Stabilisierung der Kunststoff-Dispersion eingesetzt werden können, generell verzichtet, denn das Vorhandensein solcher nichtionischer Komponenten wirkt sich ungünstig auf die Blockfestigkeit von mit diesen erfindungsgemäßen Kunststoff-Dispersionen hergestellten, bindemittelreichen Beschichtungen aus.

Falls aus Gründen der kolloidchemischen Stabilität allerdings nicht auf solche nichtionischen, stabilisierenden Komponenten verzichtet werden kann, ist unbedingt darauf zu achten, dass das Verhältnis der Gesamtmenge an ionischen Komponenten (M3) und (S1) zur eingesetzten Gesamtmenge an nichtionischen Komponenten (M5) und (S2) den Wert 1, vorzugsweise den Wert 2, und besonders bevorzugt den Wert 10 nicht unterschreitet.

Gegenstand der vorliegenden Erfindung sind auch Verfahren zur Herstellung der erfindungsgemäßen, wässrigen Kunststoff-Dispersionen auf Basis von Vinylester-Copolymerisaten.

Die Herstellung kann durch eine sogenannte Stufenpolymerisation erfolgen. Unter Stufenpolymerisation wird allgemein eine Vorgehensweise verstanden, bei der man in einer 1. Stufe die Monomere der 1. Stufe auf dem Wege einer radikalischen, wässrigen Emulsionspolymerisation, vorzugsweise in Gegenwart eines Saatlatex, der vorzugsweise in situ hergestellt wird, polymerisiert und anschließend in der wässrigen Dispersion des so erhaltenen Polymerisats der 1. Stufe die Monomere der 2. Stufe polymerisiert. Gegebenenfalls können weitere Polymerisationsstufen folgen. Dabei unterscheiden sich die Comonomere der 1. und 2. Stufe hinsichtlich der Art der Monomere und/oder in Bezug auf die relativen Mengen der Monomere zueinander. Vorzugsweise ist die Art der zu polymerisierenden Monomere für beide Stufen gleich. Es bestehen dann lediglich Unterschiede hinsichtlich der relativen Mengen der Monomere zueinander.

Im allgemeinen wird bei der Wahl der Monomerzusammensetzung der einzelnen Stufen so vorgegangen, dass in einer ersten Stufe eine Monomerzusammensetzung gewählt wird, die zur Bildung des Homo- oder Copolymerisats B führt und in einer weiteren Stufe, vorzugsweise der zweiten Stufe, eine entsprechende Monomerzusammensetzung polymerisiert wird, die zur Bildung des Homo- oder Copolymerisats A führt. Es kann jedoch auch in umgekehrter Weise verfahren werden und das Homo- oder Copolymerisat B in Gegenwart des zuvor hergestellten Homo- oder Copolymerisats A und gegebenenfalls weiterer Stufen erzeugt werden.

Die mittels der Stufenpolymerisation hergestellten Vinylester-Copolymerisate P umfassen dabei unabhängig von der nachweisbaren Morphologie alle Copolymerisate, bei denen die Homo- oder Copolymerisat-Komponenten A und B durch aufeinanderfolgende Stufen der Emulsionspolymerisation erzeugt worden sind.

Die Monomerenmischung zur Erzeugung des Homo- oder Copolymerisats A enthält, bezogen auf die Gesamtmenge der zur Herstellung des Homo- oder Copolymerisats A eingesetzten Monomere, mehr als 50 Gew.-%, vorzugsweise mehr als 70 Gew.-%, besonders bevorzugt mehr als 80 Gew.-%, und insbesondere 80 bis 95 Gew.-% an Monomeren (M1), sowie weniger als 25 Gew.-%, vorzugsweise 5 bis 20 Gew.-% und besonders bevorzugt 10 bis 15 Gew.-% an Monoolefinen mit 2 bis 4 C-Atomen (M2) und vorzugsweise bis zu 10 Gew.-%, besonders bevorzugt bis zu 5 Gew.-% und insbesondere bis zu 3 Gew.-% an ionischen Monomeren (M3), wobei die Zusammensetzung der Monomerenmischung so gewählt wird, dass ein mit dieser Monomerenmischung separat polymerisiertes Homo- oder Copolymerisat eine Glasübergangstemperatur im Bereich 0 bis 20°C, vorzugsweise im Bereich von 0 bis 15°C und besonders bevorzugt im Bereich von 0 bis 10°C aufweist.

Die Monomerenmischung zur Erzeugung des Homo- oder Copolymerisats B enthält, bezogen auf die Gesamtmenge der zur Herstellung des Homo- oder Copolymerisats B eingesetzten Monomere, mehr als 50 Gew.-%, vorzugsweise mehr als 70 Gew.-%, besonders bevorzugt mehr als 80 Gew.-% und insbesondere 90 bis 98 Gew.-% an Monomeren (M1), sowie weniger als 25 Gew.-%, vorzugsweise weniger als 20 Gew.-%, besonders bevorzugt 0,1 bis 10 Gew.-% und insbesondere 0,1 bis 5 Gew.-% an Monoolefinen mit 2 bis 4 C-Atomen (M2) und vorzugsweise bis zu 10 Gew.-%, besonders bevorzugt bis zu 5 Gew.-% und insbesondere 0,1 bis 3 Gew.-% an ionischen Monomeren (M3), wobei die Zusammensetzung der Monomerenmischung so gewählt wird, dass ein mit dieser Monomerenmischung separat polymerisiertes Homo- oder Copolymerisat eine Glasübergangstemperatur im Bereich 20 bis 50°C, vorzugsweise im Bereich von 25 bis 45°C und besonders bevorzugt im Bereich von 30 bis 43°C aufweist.

Darüber hinaus ist bei der Wahl der Monomerzusammensetzungen der beiden Homo- oder Copolymerisate A und B des heterogenen Vinylester-Copolymerisats P darauf zu achten, dass sich deren Glasübergangstemperaturen um mehr als 10 K, vorzugsweise um mehr als 15 K und besonders bevorzugt um mehr als 20 K unterscheiden.

Bei der Wahl der Monomerzusammensetzungen ist zudem darauf zu achten, dass bezogen auf die Gesamtmenge der zur Herstellung des Copolymerisats P eingesetzten Monomere weniger als 20 Gew.-%, vorzugsweise 0,1 bis 20 Gew.-% und besonders bevorzugt 0,1 bis 15 Gew.-%, an ethylenisch ungesättigten Monoolefinen mit 2 bis 4 Kohlenstoffatomen (M2) eingesetzt werden.

In besonderen Ausführungsformen kann es notwendig sein, durch die unterschiedlichen Anteile an Monoolefinen (M2), die unter den Reaktionsbedingungen im gasförmigen Aggregatzustand vorliegen, die einzelnen Polymerisationsstufen bei unterschiedlichen Polymerisationsdnrcken durchzuführen. In diesen Fällen beträgt der Druck, der durch das Dosieren der gasförmigen Monomerkomponenten (M2) erzeugt wird, während der Polymerisation der zu Copolymerisat B führenden Monomer-Zusammensetzung vorzugsweise zwischen 0 und 10 bar, besonders bevorzugt zwischen 2 und 10 bar und während der Polymerisation der zu Copolymerisat A führenden Monomer-Zusammensetzung vorzugsweise zwischen 10 und 120 bar, besonders bevorzugt zwischen 20 und 60 bar.

Überraschenderweise wurde dabei gefunden, dass zur Herstellung der Vinylester-Copolymerisate P, wobei Copolymerisat A in Gegenwart von Copolymerisat B erzeugt wird, eine Polymerisation der einzelnen Stufen bis zu Monomergehalten < 0,3 %, wie sie üblicherweise zur Generierung getrennter Polymerphasen durchgeführt wird, nicht notwendig ist.

In einer besonders bevorzugten Ausführungsform ist es deshalb ausreichend, wenn nach Erzeugung des Copolymerisats B zur Generierung des Copolymerisats A, die Konzentration der Monomerkomponente(n) M2, die unter den Reaktionsbedingungen gasförmig vorliegen, bei kontinuierlicher Dosierung flüssiger Monomerkomponenten, über ein angemessenes Zeitintervall sukzessive erhöht wird (Druckerhöhung). Dieses Verfahren zeichnet sich gegenüber den üblicherweise angewendeten Verfahren durch deutlich reduzierte Reaktorbelegzeiten aus.

Die Polymerisation wird im allgemeinen bei Temperaturen im Bereich von 20 bis 120°C, vorzugsweise im Bereich von 40 bis 95°C und besonders bevorzugt im Bereich von 50 bis 90°C durchgeführt.

Die Herstellung der erfindungsgemäßen, wässrigen Kunststoff-Dispersionen auf Basis von Vinylester-Copolymerisaten erfolgt vorzugsweise durch radikalische, wässrige Emulsionspolymerisation der genannten Monomere in Gegenwart mindestens eines radikalischen Polymerisationsinitiators und mindestens einer grenzflächenaktiven Substanz.

Als radikalische Polymerisationsinitiatoren kommen alle bekannten Initiatoren in Betracht, die in der Lage sind, eine radikalische, wässrige Emulsionspolymerisation zu starten. Es kann sich dabei sowohl um Peroxide, wie z. B. Alkalimetallperoxodisulfate als auch um Azoverbindungen handeln. Als Polymerisationsinitiatoren können auch sogenannte Redoxinitiatoren verwendet werden, die aus mindestens einem organischen und/oder anorganischen Reduktionsmittel und mindestens einem Peroxid und/oder Hydroperoxid zusammengesetzt sind, wie z.B. tert.-Butyl-Hydroperoxid mit Schwefelverbindungen, wie z.B. dem Natriumsalz der Hydroxymethansulfinsäure, Natriumsulfit, Natriumdisulfit, Nathumthiosuffat und Acetonbisulfitaddukt, oder Wasserstoffperoxid mit Ascorbinsäure. Auch können kombinierte Systeme verwendet werden, die eine geringe Menge einer im Polymerisationsmedium löslichen Metallverbindung enthalten, deren metallische Komponente in mehreren Wertigkeitsstufen auftreten kann, wie z.B. Ascorbinsäure/Eisen(II)sulfat/Wasserstoffperoxid, wobei an Stelle von Ascorbinsäure auch häufig das Natriumsalz der Hydroxymethansulfinsäure, Acetonbisulfitaddukt, Natriumsulfft, Natriumhydrogensulfit oder Natriumbisulfit und an Stelle von Wasserstoffperoxid organische Peroxide wie z.B. tert.-Butylhydroperoxid oder Alkaliperoxodisulfate und/oder Ammoniumperoxodisulfat verwendet werden. Anstelle des genannten Acetonbisutfitaddukts können auch weitere dem Fachmann bekannte Bisulfitaddukte eingesetzt werden, wie sie beispielsweise in der EP-A-0 778 290 und in den darin zitierten Literaturstellen beschrieben sind. Weitere bevorzugte Initiatoren sind Peroxodisulfate, wie z.B. Natriumperoxodisulfat. Vorzugsweise beträgt die Menge der eingesetzten, radikalischen Initiatorsysteme, bezogen auf die Gesamtmenge der zu polymerisierenden Monomeren, 0,05 bis 2,0 Gew.-%.

Als grenzflächenaktive Substanzen werden bei der Emulsionspolymerisation üblicherweise Schutzkolloide und die oben beschriebenen ionischen sowie gegebenenfalls nichtionischen Emulgatoren S1 und S2 eingesetzt, deren relative Molekulargewichte im Unterschied zu den Schutzkolloiden unter 2000 g/mol liegen.

Die grenzflächenaktiven Substanzen werden üblicherweise in Mengen von bis zu 10 Gew.-%, vorzugsweise von 0,5 bis 7 Gew.-% und besonders bevorzugt von 1 bis 6 Gew.-%, bezogen auf die zu polymerisierenden Monomere, eingesetzt.

Geeignete Schutzkolloide sind beispielsweise Polyvinylalkohole, Stärke- und Cellulosederivate sowie Vinylpyrrolidon, wobei Polyvinylalkohole und Cellulosederivate, wie z.B. Hydroxyethylcellulosen, bevorzugt sind. Eine ausführliche Beschreibung weiterer, geeigneter Schutzkolloide findet sich in Houben-Weyl, Methoden der organischen Chemie, Band XIV/1, Makromolekulare Stoffe, Georg-Thieme Verlag, Stuttgart 1961, S. 411 bis 420.

Das Molekulargewicht der Vinylester-Copolymerisate kann durch Zugabe geringer Mengen einer oder mehrerer das Molekulargewicht regelnder Substanzen eingestellt werden. Diese sogenannten "Regler" werden im allgemeinen in einer Menge von bis zu 2 Gew.-%, bezogen auf die zu polymerisierenden Monomere, eingesetzt. Als "Regler" können alle dem Fachmann bekannten Substanzen eingesetzt werden. Bevorzugt sind z.B. organische Thioverbindungen, Silane, Allylalkohole und Aldehyde.

Die Emulsionspolymerisation erfolgt üblicherweise nach der Batchfahrweise, vorzugsweise nach einem halbkontinuiertichen Verfahren. Bei halbkontinuierlichen Verfahren wird die Hauptmenge, d.h. mindestens 70 %, vorzugsweise mindestens 90%, der zu polymerisierenden Monomere kontinuierlich, einschließlich Stufen- oder Gradientenfahrweise, dem Polymerisationsansatz zugeführt. Diese Vorgehensweise wird auch als Monomerzulaufverfahren bezeichnet, wobei man unter Monomerzulauf das Zudosieren gasförmiger Monomerer, flüssiger Monomermischungen, Monomerlösungen oder insbesondere wässriger Monomeremulsionen versteht. Dabei kann die Dosierung der einzelnen Monomere durch separate Zuläufe erfolgen.

Neben der saatfreien Herstellungsweise kann zur Einstellung einer definierten Polymerteilchengröße die Emulsionspolymerisation auch nach dem Saatlatex-Verfahren oder in Gegenwart von in situ hergestellten Saatlatices erfolgen. Solche Verfahren sind bekannt und werden in einer Vielzahl von Patentanmeldungen (z.B. EP-A-0 040 419 und EP-A-0 567 812) und Publikationen ("Encyclopedia of Polymer Science and Technology", Vol. 5, John Wiley & Sons Inc., New York 1966, S. 847) ausführlich beschrieben.

Im Anschluss an die eigentliche Polymerisationsreaktion kann es wünschenswert und/oder erforderlich sein, die erfindungsgemäßen, wässrigen Kunststoff-Dispersionen weitgehend frei von Geruchsträgern, wie z.B. Restmonomeren und anderen flüchtigen, organischen Bestandteilen zu gestalten. Dies kann in an sich bekannter Weise beispielsweise physikalisch durch destillative Entfernung (insbesondere über Wasserdampfdestillation) oder durch Abstreifen mit einem inerten Gas erreicht werden. Ferner kann die Absenkung der Restmonomere auch chemisch durch radikalische Nachpolymerisation, insbesondere durch Einwirkung von Redoxinitiatorsystemen, wie sie z.B. in der DE-A-44 35 423 beschrieben sind, erfolgen. Bevorzugt ist eine Nachpolymerisation mit einem Redoxinitiatorsystem aus mindestens einem organischen Peroxid sowie einem organischen und/oder anorganischen Sulfit. Besonders bevorzugt ist eine Kombination aus physikalischen und chemischen Methoden, wobei nach einer Absenkung des Restmonomer-Gehaltes durch chemische Nachpolymerisation die weitere Absenkung des Restmonomer-Gehaltes mittels physikalischer Methoden auf vorzugsweise <1000 ppm, besonders bevorzugt <500 ppm, insbesondere <100 erfolgt.

Die erfindungsgemäßen wässrigen Kunststoff-Dispersionen auf Basis von Vinylester-Copolymerisaten werden beispielsweise als Bindemittel in pigmenthaltigen, wässrigen Zubereitungen eingesetzt, die zur Beschichtung von Substraten dienen. Hierunter fallen beispielsweise kunstharzgebundene Putze, Fliesenkleber, Anstrichmittel, wie z.B. Dispersionsfarben, Dispersionslacke und Lasuren, Dichtmassen und Versiegelungsmassen, vorzugsweise für poröse Bauteile, aber auch Papierstreichmassen.

Die wässrigen Kunststoff-Dispersionen können aber auch direkt oder nach Zusatz rheologiemodifizierender Additive und/oder weiterer Komponenten als wässrige Zubereitungen zur Beschichtung von Substraten eingesetzt werden. Solche wässrige Zubereitungen sind beispielsweise Grundierungen, Klarlacke oder auch Lebensmittelbeschichtungen, die Lebensmittel, wie z.B. Käse oder fleischhaltige Zubereitungen, vor schädlichen Umwelteinflüssen und/oder Austrocknung schützen.

Ein weiterer Gegenstand der vorliegenden Erfindung sind somit wässrige Zubereitungen enthaltend die erfindungsgemäße wässrige Kunststoff-Dispersion auf Basis von Vinylester-Copolymerisaten. Eine bevorzugte Ausführungsform der wässrigen Zubereitungen sind pigmenthaltige, wässrige Zubereitungen.

Diese bevorzugten, pigmenthaltigen Zubereitungen, besonders bevorzugt Dispersionsfarben, enthalten im allgemeinen 30 bis 75 Gew.-%, vorzugsweise 40 bis 65 Gew.-%, nichtflüchtige Bestandteile. Hierunter sind alle Bestandteile der Zubereitung außer Wasser zu verstehen, zumindest aber die Gesamtmenge an festem Bindemittel, Füllstoff, Pigment, Weichmacher und polymerem Hilfsmittel.

Von den nichtflüchtigen Bestandteile entfallen dabei vorzugsweise

a) 3 bis 90 Gew.-%, besonders bevorzugt 10 bis 60 Gew.-%, auf das feste Bindemittel, d.h. das Vinylester-Copolymerisat P,
b) 5 bis 85 Gew.-%, besonders bevorzugt 10 bis 60 Gew.-%, auf mindestens ein anorganisches Pigment,
c) 0 bis 85 Gew.-%, besonders bevorzugt 20 bis 70 Gew.-%, auf anorganische Füllstoffe und
d) 0,1 bis 40 Gew.-%, besonders bevorzugt 0,5 bis 15 Gew.-%, auf übliche Hilfsmittel.

Besonders bevorzugt sind lösemittel- und weichmacherfreie, wässrige Zubereitungen.

Die Pigment-Volumen-Konzentration (PVK) der erfindungsgemäßen, pigmenthaltigen, wässrigen Zubereitungen liegt im allgemeinen oberhalb von 5 %, vorzugsweise im Bereich von 10 bis 90 %. In besonders bevorzugten Ausführungsformen liegen die PVKs entweder im Bereich von 10 bis 45 % oder im Bereich von 60 bis 90 %, insbesondere 70 bis 90 %.

Als Pigmente können alle dem Fachmann für den genannten Einsatzzweck bekannten Pigmente verwendet werden. Bevorzugte Pigmente für die erfindungsgemäßen, wässrigen Zubereitungen, vorzugsweise für Dispersionsfarben, sind beispielsweise Titandioxid, vorzugsweise in der Rutilform, Bariumsulfat, Zinkoxid, Zinksulfid, basisches Bleicarbonat, Antimontrioxid und Lithopone (Zinksulfid und Bariumsulfat). Die wässrigen Zubereitungen können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten. Neben den

anorganischen Pigmenten können die erfindungsgemäßen Zubereitungen auch organische Farbpigmente, beispielsweise Sepia, Gummigutt, Kasseter Braun, Toluidinrot, Pararot, Hansagelb, Indigo, Azofarbstoffe, Anthrachinoide und Indigoide Farbstoffe sowie Dioxazin, Chinacridon-, Phthalocyanin-, Isoindolinon- und Metallkomplexpigmente enthalten.

Als Füllstoffe können alle dem Fachmann für den genannten Einsatzzweck bekannten Füllstoffe verwendet werden. Bevorzugte Füllstoffe sind Alumosilicate, wie z.B. Feldspate, Silicate, wie z.B. Kaolin, Talkum, Glimmer, Magnesit, Erdalkalicarbonate, wie z.B. Calciumcarbonat, beispielsweise in Form von Calcit oder Kreide, Magnesiumcarbonat, Dolomit, Erdalkalisulfate, wie z.B. Calciumsulfat, und Siliciumdioxid. Die Füllstoffe können entweder als Einzelkomponenten oder als Füllstoffmischungen eingesetzt werden. In der Praxis bevorzugt sind Füllstoffmischungen wie z.B. Calciumcarbonat/Kaolin und Calciumcarbonat/Talkum. Kunstharzgebundene Putze können auch gröbere Zuschläge, wie Sände oder Sandsteingranulate, enthalten.

In Dispersionsfarben werden im allgemeinen feinteilige Füllstoffe bevorzugt. Zur Erhöhung der Deckkraft und zur Einsparung von Weißpigmenten werden in Dispersionsfarben häufig vorzugsweise feinteilige Füllstoffe, wie z.B. gefälltes Calciumcarbonat oder Mischungen verschiedener Calciumcarbonate mit unterschiedlichen Teilchengrößen eingesetzt. Zur Einstellung der Deckkraft des Farbtons und der Farbtiefe werden vorzugsweise Abmischungen aus Farbpigmenten und Füllstoffen eingesetzt.

Zu den üblichen Hilfsmitteln zählen Netz- oder Dispergiermittel, wie Natrium-, Kalium- oder Ammoniumpolyphosphate, Alkalimetall- und Ammoniumsalze von Polyacrylsäuren und von Polymaleinsäure, Polyphosphonate, wie 1-Hydroxyethan-1,1-diphosphonsaures Natrium sowie Naphthalinsulfonsäuresatze, insbesondere deren Natriumsalze. Als Dispergiermittel können darüber hinaus geeignete Aminoalkohole, wie z.B. 2-Amino-2-methylpropanol, verwendet werden. Die Dispergiermittel bzw. Netzmittel werden vorzugsweise in einer Menge von 0,1 bis 2 Gew.-% bezogen auf das Gesamtgewicht der Dispersionsfarbe, eingesetzt.

Ferner können die Hilfsmittel auch Verdickungsmittel umfassen, beispielsweise Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyrrolidon, Natriumpolyacrylate, wasserlösliche Copolymerisate auf Acryl- und (Meth)acrylsäurebasis, wie Acrylsäure/Acrylamid- und (Meth)acrylsäure/Acrylester-Copolymerisate und sog. Assoziativverdicker, wie Styrol-Maleinsäureanhydrid-Polymerisate oder vorzugsweise dem Fachmann bekannte hydrophob modifizierte Polyetherurethane (HEUR), hydrophob modifizierte Acrylsäure-Copolymere (HASE) und Polyetherpolyole.

Auch anorganische Verdickungsmittel, wie z.B. Bentonite oder Hectorit, können verwendet werden.

Die Verdickungsmittel werden vorzugsweise in Mengen von 0,1 bis 3 Gew.-%, besonders bevorzugt 0,1 bis 1 Gew.-%, bezogen auf das Gesamtgewicht der wässrigen Zubereitung, verwendet.

Auch können die erfindungsgemäßen, wässrigen Zubereitungen vemetzende Zusätze enthalten. Derartige Zusätze können sein: aromatische Ketone, wie z.B. Alkylphenylketone, die gegebenenfalls am Phenylring einen oder mehrere Substituenten aufweisen, oder Benzophenon und substituierte Benzophenone als Photoinitiatoren. Für diesen Zweck geeignete Photoinitiatoren werden z.B. in der DE-A-38 27 975 und der EP-A-0 417 568 offenbart. Geeignete, vemetzend wirkende Verbindungen sind auch wasserlösliche Verbindungen mit mindestens zwei Aminogruppen, beispielsweise Dihydrazide aliphatischer Dicarbonsäuren, wie sie z.B. in der DE-A-39 01 073 offenbart werden, wenn das Vinylester-Copolymerisat P Carbonylgruppen enthaltende Monomere copolymerisiert enthält.

Darüber hinaus können als Hilfsmittel in den erfindungsgemäßen, wässrigen, Zubereitungen auch Wachse aus Basis von Paraffinen und Polyethylen, sowie Mattierungsmittel, Entschäumer, Konservierungs- oder Hydrophobiermittel, Biozide, Fasern sowie weitere dem Fachmann bekannte Additive eingesetzt werden.

Mit den erfindungsgemäßen Dispersionen können neben lösungsmittel- und weichmacherfreien Zubereitungen selbstverständlich auch Beschichtungssysteme hergestellt werden, die Lösungsmittel und/oder Weichmacher als Filmbildehilfsmittel enthalten. Filmbildehilfsmittel sind dem Fachmann allgemein bekannt und können üblicherweise in Mengen von 0,1 bis 20 Gew.-%, bezogen auf das in der Zubereitung enthaltene Vinylester-Copolymerisat P, eingesetzt werden, so dass die wässrige Zubereitung eine Mindestfilmbildetemperatur von weniger als 15°C, vorzugsweise im Bereich von 0 bis 10°C, aufweist. Der Einsatz dieser Filmbildehilfsmittel ist allerdings in Anbetracht der vorteilhaften Eigenschaften der erfindungsgemäßen Kunststoff-Dispersionen nicht notwendig. In einer bevorzugten Ausführungsform enthalten die erfindungsgemäßen, wässrigen Zubereitungen deshalb kein Filmbildehilfsmittel.

Die erfindungsgemäßen, wässrigen Zubereitungen sind stabile fluide Systeme, die man zur Beschichtung von einer Vielzahl von Substraten verwenden kann. Folglich betrifft die vorliegende Erfindung auch Verfahren zum Beschichten von Substraten sowie die Beschichtungsmittel selbst. Geeignete Substrate sind beispielsweise Holz, Beton, Metall, Glas, Keramiken, Plastik, Putze, Tapeten, Papier, gestrichene, grundierte oder verwitterte Untergründe. Das Aufbringen der Zubereitung auf das zu beschichtende Substrat erfolgt in einem von der Ausgestaltung der Zubereitung abhängigen Weise. Das Aufbringen kann, abhängig von der Viskosität und dem Pigmentgehalt der Zubereitung sowie dem Substrat mittels Rollen, Bürsten, Rakeln oder als Spray erfolgen.

Die vorteilhaften Eigenschaften des Vinylester-Copolymerisates P als Bindemittel gegenüber Vinylester-Copolymerisaten aus dem Stand der Technik, vor allem die verbesserte Blockfestigkeit in bindemittelreichen BeschichtungsZusammensetzungen, macht sich besonders bei pigmenthaltigen Zubereitungen mit einer PVK < 45 %, vorzugsweise 10 bis 45 %, bemerkbar.

Darüber hinaus zeigen diejenigen Vinylester-Copolymerisate P, die Silicium-organische Verbindungen copolymerisiert enthalten, neben verbesserten Blockfestigkeiten in bindemittelreichen Beschichtungszusammensetzungen mit einer PVK von weniger als 45 %, weitere vorteilhafte Eigenschaften, wie eine verbesserte Nassabriebfestigkeit, in wässrigen Zubereitungen mit einer PVK > 60 %. Eine verbesserte Nassabriebfestigkeit, d.h. eine verbesserte mechanische Stabilität der Beschichtungen gegenüber abrasiven Einflüssen im feuchten Zustand ist für die Nassreinigungsbeständigkeit der Beschichtungen, wie auch bei Außenanwendungen beispielsweise für die Witterungsstabilität günstig und bewirkt, dass die Beschichtungen abwaschbar sind. Somit werden die Vorteile der erfindungsgemäßen Vinylester-Copolymerisate P, die Silicium-organische Verbindungen copolymerisiert enthalten, besonders deutlich in Zubereitungen, die eine PVK im Bereich von 10 bis 90 % aufweisen, z.B. bei einer PVK im Bereich von 10 bis 45 % oder bei einer PVK im Bereich von 60 bis 90%, insbesondere 70 bis 90%.

Die Erfindung wird im folgenden anhand von Ausführungsbeispielen näher beschrieben, ohne dadurch jedoch in irgendeiner Weise beschränkt zu werden.

I. Herstellung und Charakterisierung der erfindungsgemäßen Kunststoff-Dispersionen

Die im Rahmen der Beispiele und Vergleichsbeispiele hergestellten Dispersionen werden in einem 70 l Druckautoklaven mit Mantelkühlung und einem zugelassenen Druckbereich bis 160 bar ausgeführt. Die in den nachfolgenden Beispielen verwendeten Teile und Prozente beziehen sich auf das Gewicht, soweit nicht anders vermerkt.

Die Viskosität der Dispersionen werden mit einem Haake-Rotationsviskosimeter (Rheomat® VT 500) bei Raumtemperatur und einem Schergefälle von 17,93 $s^{-1}$ ermittelt.

Die mittlere Teilchengröße und die Teilchengrößenverteilung werden durch Laser- und Weißlichtaerosolspektroskopie bestimmt. Die angegebenen Teilchengrößen entsprechen dem Teilchendurchmesser nach Trocknung.

Die in den Beispielen angegebenen Restmonomermengen werden durch Gaschromatographie (GC) ermittelt.

Die Bestimmung der Mindestfilmbildetemperatur (MFT) der Polymerisatdispersionen erfolgt in Anlehnung an Ulimanns Enzyklopädie der technischen Chemie, 4. Aufl.
Bd. 19, VCH Weinheim 1980, S.17. Als Messgerät dient eine sogenannte Filmbildebank, die aus einer Metallplatte besteht, an die ein Temperaturgradient angelegt wird und an die zur Temperaturkalibrierung an verschiedenen Stellen Temperatursensoren angebracht sind, wobei der Temperaturgradient so gewählt wird, dass das eine Ende der Filmbildebank eine Temperatur oberhalb der zu erwartenden MFT und das andere Ende eine Temperatur unterhalb der zu erwartenden MFT aufweist. Auf die Filmbildebank wird nunmehr die wässrige Polymerisatdispersion aufgebracht. In den Bereichen der Filmbildebank, deren Temperatur oberhalb der MFT liegt, bildet sich beim Trocknen ein klarer Film aus, wohingegen in den kühleren Bereichen Risse auftreten und bei noch niedrigeren Temperaturen sich ein weißes Pulver bildet. Anhand des bekannten Temperaturprofils der Platte wird die MFT visuell als diejenige Temperatur bestimmt, bei der erstmals ein rissfreier Film vorliegt.

Die Glasübergangstemperatur der einzelnen Polymerisationsstufen wird unter Berücksichtigung der Hauptmonomere nach der Fox-Gleichung näherurigsweise berechnet. Als Berechnungsgrundlage werden die Glasübergangstemperaturen der zu den einzelnen Monomeren korrespondierenden Homopolymere verwendet, wie sie in Ullmann's Enzyclopädia of Industrial Chemistry, VCH Weinheim, Vol. A 21 (1992) S. 169 oder in Brandrup, E.H. Immergut Polymer Handbook 3rd ed, J. Wiley, New York 1989 beschrieben sind. Für Ethen wird eine Glasübergangstemperatur des Homopolymerisats von 148 K (siehe Brandrup, E.H. Immergut Polymer Handbook 3rd ed, J. Wiley, New York 1989, S. VI/214) und für Vinylacetat eine Glasübergangstemperatur des Homopolymerisats von 315 K (siehe Ullmann's Enzyclopädia of Industrial Chemistry, VCH Weinheim, Vol. A 21 (1992) S. 169) angenommen.

Die Angaben zum Ethengehalt beziehen sich auf den relativen Gewichtsanteil Ethen an den Monomereinheiten im Copolymerisat P.

Vergleichsbeispiel A1

Polymerisationsstufe 1:

In ein 70 l-Druckreaktionsgefäß mit Temperaturregeleinrichtung, Rührwerk, Dosierpumpen und einer Dosiereinrichtung für gasförmiges Ethen (Massendurchflussmessung) wird eine Lösung (Vorlage), bestehend aus den folgenden Bestandteilen eingegeben:

| | |
|---|---|
| 8060 g | Wasser |

(fortgesetzt)

| | |
|---|---|
| 88,55 g | Natriumacetat |
| 594,5 g | 30 %ige Natriumethensulfonat-Lösung in Wasser |
| 70.45 g | Natriumlaurylsulfat (®Texapon K12 Granulat, Cognis) |
| 5284 g | 20 %ige Lösung eines Nonyiphenolethoxylates mit 30 Ethylenoxideinheiten (®Arkopal N300, Clariant) in Wasser |
| 34,87 g | 1 %ige Lösung von Fe-II-($SO_4$) x 7 ($H_2O$) in Wasser |
| 14240 g | 5 %ige Lösung von Hydroxyethylcellulose in Wasser (HEC-Lösung) (Viskosität der 2 gew.-%igen wässrigen Lösung 350 mPas) |

Der pH-Wert der Vorlage beträgt 7,2. Die Apparatur wird durch zweimaliges Evakuieren und Belüften mit Stickstoff von Luftsauerstoff befreit. Es wird ein drittes Mal evakuiert und insgesamt 350 g Ethen in die Apparatur gedrückt, der Kesselinnendruck beträgt nach Zudosierung dieser Ethenmenge ca. 7 bar. Daraufhin wird die Ethenzufuhr geschlossen und es werden 3170 g Vinylacetat und 2,82 g ®Rongalit C (BASF) gelöst in 208 g Wasserzudosiert. Im Anschluss wird die Innentemperatur auf 60°C erhöht. Bei Erreichen von 50°C Innentemperatur wird eine Mischung von 4,0 g einer wässrigen 70 %igen tert.-Butylhydroperoxid Lösung und 208 g Wasser zudosiert und es wird zur Abführung der Reaktionswärme gekühlt. Bei Erreichen von 60°C Innentemperatur werden innerhalb von 90 Minuten 7133 g Vinylacetat, sowie innerhalb von 130 Minuten eine Lösung von 9,1 g ®Rongalit C in 669 g Wasser und eine Mischung aus 12,9 g einer wässrigen 70 %igen tert.-Butylhydroperoxid Lösung und 669 g Wasser zudosiert. Die Innentemperatur wird über die gesamte Dosierzeit bei 60°C gehalten. Eine Dispersionsprobe, die nach Ende der Dosierungen der Initiatorkomponenten entnommen wird, weist einen Restvinylacetatgehalt < 0,3 % und einen Feststoffgehalt von 31,2 % auf.

Polymerisationsstufe 2:

Nach Dosierende der Initiatorlösungen der ersten Stufe wird das Ethenventil geöffnet und bei einer Innentemperatur von 60°C durch Zudosieren von Ethen der Kesselinnendruck auf 40 bar erhöht. Nach Erreichen eines Kesselinnendruckes von 40 bar werden bei 60°C Innentemperatur innerhalb von 270 Minuten 21400 g Vinylacetat, sowie eine Lösung von 18,8 g ®Rongalit C in 1389 g Wasser und eine Mischung aus 27,0 g einer wässrigen 70 %igen tert.-Butylhydroperoxid Lösung und 1389 g Wasser zudosiert. Dabei bleibt die Ethenzufuhr bei einem Innendruck von 40 bar solange geöffnet, bis weitere 3172 g Ethen eindosiert sind. Nach Beendigung aller Dosierungen wird eine Lösung von 35,7 g Natriumperoxodisulfat in 832 g Wasser zugegeben, die Innentemperatur auf 80°C erhöht und nach beendeter Reaktion nach einer weiteren Stunde abgekühlt. Der Kesselinnendruck nach Abkühlen auf 30°C beträgt 0.15 bar.

Beispiel A2

Die Herstellung der Dispersion erfolgt analog zur Herstellung der unter Beispiel A1 beschriebenen Dispersion. Davon abweichend wird als Vorlage eine Lösung der folgenden Bestandteile eingesetzt:

| | |
|---|---|
| 10580 g | Wasser |
| 88,55 g | Natriumacetat |
| 594,5 g | 30 %ige Natriumethensulfonat-Lösung in Wasser |
| 2439 g | 30 %ige Lösung eines Natrium-$C_{13}$-$C_{17}$-Alkylsulfonats in Wasser (®Emulsogen EP, Clariant) |
| 34,87 g | 1 %ige Lösung von Fe-II-($SO_4$) x 7 ($H_2O$) in Wasser |
| 14240 g | 5 %ige Lösung von Hydroxyethylcellulose in Wasser (HEC-Lösung) (Viskosität der 2 gew.-%igen wässrigen Lösung 350 mPas) |

Der pH-Wert der Vorlage beträgt 7,3.

Eine Dispersionsprobe, die am Ende der Polymerisationsstufe 1 entnommen wird, weist einen Restvinylacetatgehalt < 0,3 % und einen Feststoffgehalt von 30,8 % auf. Der Kesselinnendruck nach dem Ende der Reaktion und Abkühlen auf 30°C beträgt 0,24 bar.

Beispiel A3

In ein 70 l-Druckreaktionsgefäß mit Temperaturregeleinrichtung, Rührwerk, Dosierpumpen und einer Dosiereinrichtung für gasförmiges Ethen (Massendurchflussmessung) wird als Vorlage eine Lösung bestehend aus den folgenden Bestandteilen eingegeben:

| | |
|---|---|
| 10955 g | Wasser |
| 88,55 g | Natriumacetat |
| 594,5 g | 30 %ige Natriumethensulfonat-Lösung in Wasser |
| 2439 g | 30 %ige Lösung eines Natrium-$C_{13}$-$C_{17}$-Alkylsulfonats in Wasser (®Emulsogen EP, Clariant) |
| 34,87 g | 1 %ige Lösung von Fe-II-$(SO_4)$ x 7 $(H_2O)$ in Wasser |
| 14240 g | 5 %ige Lösung von Hydroxyethylcellulose in Wasser (HEC-Lösung) (Viskosität der 2 gew.%-igen wässrigen Lösung 350 mPas) |

Der pH-Wert der Vorlage beträgt 7,3. Anschließend wird die Apparatur durch zweimaliges Evakuieren und Belüften mit Stickstoff von Luftsauerstoff befreit. Es wird ein drittes Mal evakuiert und insgesamt 350 g Ethen in die Apparatur gedrückt (Beginn Polymerisationsstufe 1), der Kesselinnendruck beträgt nach Zudosierung dieser Ethenmenge ca. 7 bar. Daraufhin wird die Ethenzufuhr geschlossen und es werden 3170 g Vinylacetat sowie 2,82 g ®Rongalit C gelöst in 208 g Wasser zudosiert. Im Anschluss wird die Innentemperatur auf 60°C erhöht. Bei Erreichen von 50°C Innentemperatur wird eine Lösung von 4,0 g einer wässrigen 70 %igen tert.-Butylhydroperoxid Lösung in 208 g Wasser zudosiert und es wird zur Abführung der Reaktionswärme gekühlt. Bei Erreichen von 60°C Innentemperatur werden innerhalb von 360 Minuten 28532 g Vinylacetat sowie 25,4 g ®Rongalit C gelöst in 1871 g Wasser und eine Mischung aus 36,2 g einer wässrigen 70 %igen tert.-Butylhydroperoxid Lösung und 1871 g Wasser zudosiert. Die Innentemperatur wird über die gesamte Dosierzeit bei 60°C gehalten. 90 Minuten nach Dosierbeginn wird die Ethenzufuhr erneut geöffnet (Beginn Polymerisationsstufe 2) und der Kesselinnendruck durch Zudosierung von Ethen auf 40 bar erhöht, wobei die Ethenzufuhr bei diesem Innendruck solange geöffnet bleibt bis weitere 3172 g Ethen eindosiert sind. Eine nach 90 Minuten entnommene Dispersionsprobe weist einen Restvinylacetatgehalt von 0,89 % und einen Feststoffgehalt von 30,8 % auf. Nach Beendigung aller Dosierungen wird eine Lösung von 35,7 g Natriumperoxodisulfat in 832 g Wasser zugegeben, die Innentemperatur auf 80°C erhöht und nach beendeter Reaktion nach einer weiteren Stunde abgekühlt. Der Kesselinnendruck nach Abkühlen auf 30°C beträgt 0,25 bar.

Beispiel A4

Die Herstellung der Dispersion erfolgt analog zur Herstellung der unter Beispiel A3 beschriebenen Dispersion. Davon abweichend wird als Vorlage eine Lösung bestehend aus den folgenden Bestandteilen eingesetzt:

| | |
|---|---|
| 12663 g | Wasser |
| 88,55 g | Natriumacetat |
| 594,5 g | 30 %ige Natriumethensulfonat-Lösung in Wasser |
| 731,7 g | Natriumlaurylsulfat (®Texapon K12 Granulat, Cognis) |
| 34,87 g | 1 %ige Lösung von Fe-II-$(SO_4)$ x 7 $(H_2O)$ in Wasser |
| 14240 g | 5 %ige Lösung von Hydroxyethylcellulose in Wasser (HEC-Lösung) (Viskosität der 2 gew.-%igen wässrigen Lösung 350 mPas) |

Der pH-Wert der Vorlage beträgt 10,2. Der Kesselinnendruck nach dem Ende der Reaktion und Abkühlen auf 30°C beträgt 0,24 bar.

Beispiel A5

Die Herstellung der Dispersion erfolgt analog zur Herstellung der unter Beispiel A3 beschriebenen Dispersion. Davon abweichend wird als Vorlage eine Lösung der folgenden Bestandteile eingesetzt:

| | |
|---|---|
| 10781 g | Wasser |
| 88,55 g | Natriumacetat |
| 594,5 g | 30 %ige Natriumethensulfonat-Lösung in Wasser |

(fortgesetzt)

| | |
|---|---|
| 2613 g | 28 %ige Lösung eines Natrium-$C_{12}$/$C_{14}$-Alkylethersulfats mit 3 Ethylenoxideinheiten in Wasser (®Genapol ZRO liquid, Clariant) |
| 34,87 g | 1 %ige Lösung von Fe-II-($SO_4$) x 7 ($H_2O$) in Wasser |
| 14240 g | 5 %ige Lösung von Hydroxyethylcellulose in Wasser (HEC-Lösung) (Viskosität der 2 gew.-%igen wässrigen Lösung 350 mPas) |

Der pH-Wert der Vorlage beträgt 10,3. Der Kesselinnendruck nach dem Ende der Reaktion und Abkühlen auf 30°C beträgt 1,6 bar.

Beispiel A6

Die Herstellung der Dispersion erfolgt analog zur Herstellung der unter Beispiel A2 beschriebenen Dispersion. Davon abweichend werden jeweils an Stelle der in Beispiel A2 angegebenen Gewichtsmengen an Vinylacetat (insgesamt 31703 g) identische Gewichtsmengen einer Mischung aus 99,555 Gew.-% Vinylacetat und 0,445 Gew.-% γ-Methacryloxypropyltrimethoxysilan (insgesamt 31562 g Vinylacetat und 141 g γ-Methacryloxypropyltrimethoxysilan) zudosiert. Eine Dispersionsprobe, die am Ende der Polymerisationsstufe 1 entnommen wird, weist einen Restvinylacetatgehalt < 0,3 % und einen Feststoffgehalt von 29,8 % auf. Der Kesselinnendruck nach dem Ende der Reaktion und Abkühlen auf 30°C beträgt 0,7 bar.

Beispiel A7

Die Herstellung der Dispersion erfolgt analog zur Herstellung der unter Beispiel A3 beschriebenen Dispersion. Davon abweichend werden jeweils an Stelle der in Beispiel 3 angegebenen Gewichtsmengen an Vinylacetat (insgesamt 31703 g) identische Gewichtsmengen einer Mischung aus 99,555 Gew.-% Vinylacetat und 0,445 Gew.-% γ-Methacryloxypropyltrimethoxysilan (insgesamt 31562 g Vinylacetat und 141 g γ-Methacryloxypropyltrimethoxysilan) zudosiert. Eine Dispersionsprobe, die am Ende der Polymerisationsstufe 1 entnommen wird, weist einen Restvinylacetatgehalt von 0,9 % und einen Feststoffgehalt von 28,5 % auf. Der Kesselinnendruck nach dem Ende der Reaktion und Abkühlen auf 30°C beträgt 0,35 bar.

Beispiel A8

Die Herstellung der Dispersion erfolgt analog zur Herstellung der unter Beispiel A4 beschriebenen Dispersion. Davon abweichend werden jeweils an Stelle der in Beispiel A4 angegebenen Gewichtsmengen an Vinylacetat (insgesamt 31703 g) identische Gewichtsmengen einer Mischung aus 99,555 Gew.-% Vinylacetat und 0,445 Gew.-% γ-Methacryloxypropyltrimethoxysilan (insgesamt 31562 g Vinylacetat und 141 g γ-Methacryloxypropyltrimethoxysilan) zudosiert. Der Kesselinnendruck nach dem Ende der Reaktion und Abkühlen auf 30°C beträgt 2,0 bar.

In der nachfolgenden Tabelle 1 sind die zur Herstellung der Dispersionen aus den Beispielen A1 bis A8 eingesetzten Gewichtsmengen an Emulgatoren, sowie die zur Herstellung der einzelnen Copolymerisationsstufen verwendeten Monomerzusammensetzungen zusammengefasst.

Tabelle 1

| Zusammensetzung der Dispersionen aus den Beispielen A1 bis A8 | | | | | | | | |
|---|---|---|---|---|---|---|---|---|
| Beispiel | A1 [a)] | A2 | A3 | A4 | A5 | A6 | A7 | A8 |
| Monomerzusammensetzung: Copolymerisat P (Gew.-% [b)]) | | | | | | | | |
| Vinylester (M1) | 89,5 | 89,5 | 89,5 | 89,5 | 89,5 | 89,1 | 89,1 | 89,1 |
| Monoolefine (M2) | 10,0 | 10,0 | 10,0 | 10,0 | 10,0 | 10,0 | 10,0 | 10,0 |
| ionische Monomere (M3) | 0,5 | 0,5 | 0,5 | 0,5 | 0,5 | 0,5 | 0,5 | 0,5 |
| Silanmonomere (M4) | - | - | - | - | - | 0,4 | 0,4 | 0,4 |

a) Vergleichsbeispiel;

Tabelle 1 (fortgesetzt)

| Zusammensetzung der Dispersionen aus den Beispielen A1 bis A8 | | | | | | | | |
|---|---|---|---|---|---|---|---|---|
| Beispiel | A1 [a] | A2 | A3 | A4 | A5 | A6 | A7 | A8 |
| Monomerzusammensetzung: Copolymerisat P (Gew.-% [b]) | | | | | | | | |
| Mengenverhältnis Copolymerisat A / B | 69,4 / 30,6 | 69,4 / 30,6 | 69,4 / 30,6 | 69,4 / 30,6 | 69,4 / 30,6 | 69,4 / 30,6 | 69,4 / 30,6 | 69,4 / 30,6 |
| Emulgatoren (Gew.-% [b]) | | | | | | | | |
| ionische Emulgatoren (S1) | 0,2 | 2,1 | 2,1 | 2,1 | 2,1 | 2,1 | 2,1 | 2,1 |
| nicht-ionische Emulgatoren (S2) | 3,0 | - | - | - | - | - | - | - |
| Monomerzusammensetzung: Copolymerisat A (Gew.-% [c]) | | | | | | | | |
| Vinylester (M1) | 87,1 | 87,1 | 87,1 | 87,1 | 87,1 | 86,7 | 86,7 | 86,7 |
| Monoolefine (M2) | 12,9 | 12,9 | 12,9 | 12,9 | 12,9 | 12,9 | 12,9 | 12,9 |
| Silanmonomere (M4) | - | - | - | - | - | 0,4 | 0,4 | 0,4 |
| Tg (A) [°C] [e] | ca. 2 | ca. 2 | ca. 2 | ca. 2 | ca. 2 | ca. 2 | ca. 2 | ca. 2 |
| Monomerzusammensetzung: Copolymerisat B (Gew.-% [d]) | | | | | | | | |
| Vinylester (M1) | 95,1 | 95,1 | 95,1 | 95,1 | 95,1 | 94,7 | 94,7 | 94,7 |
| Monoolefine (M2) | 3,2 | 3,2 | 3,2 | 3,2 | 3,2 | 3,2 | 3,2 | 3,2 |
| ionische Monomere (M3) | 1,7 | 1,7 | 1,7 | 1,7 | 1,7 | 1,7 | 1,7 | 1,7 |
| Silanmonomere (M4) | - | - | - | - | - | 0,4 | 0,4 | 0,4 |
| Tg (B) [°C] [e] | ca. 31 | ca. 31 | ca. 31 | ca. 31 | ca. 31 | ca. 31 | ca. 31 | ca. 31 |

a) Vergleichsbeispiel;
b) Gew.-% beziehen sich auf die Gesamtmasse der zur Herstellung der Copolymerisate P eingesetzten Monomere;
c) Gew.-% beziehen sich auf die Gesamtmasse der zur Herstellung des Copolymerisats A eingesetzten Monomere;
d) Gew.-% beziehen sich auf die Gesamtmasse der zur Herstellung des Copolymerisats B eingesetzten Monomere;
e) Glasübergangstemperaturen der Polymerisationsstufen (berechnet nach Fox)

Die charakteristischen Daten der Dispersionen aus den Beispielen A1 bis A8 sowie einer handelsüblichen, homogenen Vinylacetat/Ethen-Copolymerdispersion V2 (Tg: 14°C, DSC-Analyse, Aufheizrate: 20K/min) enthält Tabelle 2.

Tabelle 2

| Charakteristische Daten der Dispersionen aus den Beispielen A1 bis A8 | | | | | | | | | |
|---|---|---|---|---|---|---|---|---|---|
| Beispiel | A1 a) | A2 | A3 | A4 | A5 | A6 | A7 | A8 | V2 a) |
| Feststoff [%] | 54,0 | 53,6 | 53,7 | 53,9 | 53,3 | 53,8 | 53,3 | 53,4 | 53,0 |
| pH-Wert | 4,9 | 4,9 | 4,9 | 4,9 | 4,8 | 4,9 | 4,9 | 4,6 | 4,4 |
| Teilchengrößenverteilung [nm] | 100-500 | 100-500 | 100-500 | 100-500 | 100-500 | 100-500 | 100-500 | 100-500 | 100-500 |
| Gewichtsmittlerer Teilchendurchmesser [nm] | 218 | 301 | 266 | 273 | 174 | 328 | 258 | 302 | 214 |
| Viskosität [Pas] | 1,31 | 0,312 | 0,380 | 0,475 | 1,12 | 0,380 | 0,362 | 0,340 | 1,04 |
| Restmonomergehalt (GC) [%] | <0,15 | <0,15 | <0,15 | <0,15 | <0,15 | <0,15 | <0,15 | <0,15 | <0,15 |
| MFT [°C]b) | 3 | 3 | <0 | 4 | <0 | 2 | <0 | 6 | <0 |

a) Vergleichsbeispiel;
b) Mindestfilmbitdetemperatur

Die anwendungstechnischen Eigenschaften (Oberflächenklebrigkeit) von Beschichtungsmassen, die nach Trocknen der reinen Dispersionen A1 bis A8 und V2 erhalten werden, sind in Tabelle 3 zusammengefasst.

Die Ergebnisse der anwendungstechnischen Prüfung der erfindungsgemäßen Beschichtungsmassen in Tabelle 3, die nach Trockenen der reinen Dispersionen aus den Beispielen A2 bis A8 erhalten werden, verdeutlichen, dass sich, im Vergleich zu einer aus dem Stand der Technik bekannten Vinylacetat-Ethen-Copolymerdispersion aus Beispiel A1 und einer handelsüblichen, homogenen Vinylacetat-Ethen-Copolymerdispersion V2, durch die erfindungsgemäße Heterogenität und überwiegende Stabilisierung mit ionischen Komponenten eine deutlich geringere Oberflächenklebrigkeit der getrockneten Beschichtungen erzielen läßt.

Tabelle 3

| Oberflächenklebrigkeit von getrockneten Dispersionsfilmen | | | |
|---|---|---|---|
| | Stabilisierung der Dispersion | | |
| Dispersion | $\Sigma$ $M_5$[a)] und $S_2$[b)] [%][e)] | $\Sigma$ $M_3$[c)] und $S_1$[d)] [%][e)] | Oberflächenklebrigkeit |
| A1 (V1[f)]) | 3 | 0,7 | 6 |
| A2 | 0 | 2,6 | 3 |
| A3 | 0 | 2,6 | 4 |
| A4 | 0 | 2,6 | 3 |
| A5 | 0 | 2,6 | 1 |
| A6 | 0 | 2,6 | 3 |
| A7 | 0 | 2,6 | 3 |
| A8 | 0 | 2,6 | 1 |
| V2 [g)] | - [h)] | - [h)] | 6 |

a) $M_5$: nichtionische Monomere;
b) $S_2$: nichtionische Emulgatoren;
c) $M_3$: ionische Monomere;
d) $S_1$: ionische Emulgatoren;
e) Prozentangaben beziehen sich auf die Gesamtmenge der zur Herstellung der Dispersion eingesetzten Monomere;
f) Vergleichsdispersion 1;
g) Vergleichsdispersion 2: handelsübliche, homogene Vinylacetat/Ethen-Copolymerdispersion;
h) nicht angegeben.

II. Herstellung der erfindungsgemäßen pigmenthaltigen Zubereitungen

II.1. Lösemittelfreier Dispersionslack mit einer PVK von 16,8 %; Formulierung (I) (Vergleichsbeispiele B1 und B9, Beispiele B2 bis B8)

In einem Gefäß werden die folgenden Bestandteile vorgelegt:

| | |
|---|---|
| 86,0 g | Wasser |
| 8,0 g | Dispergierhilfsmittel Lopon® 890; BK Guilini Chemie GmbH & Co. OHG |
| 2,0 g | Dispergierhilfsmittel 2-Amino-2-methylpropanol (90 % in Wasser) |
| 2,0 g | Entschäumer Agitan® 295; Münzing-Chemie GmbH, Heilbronn |
| 2,0 g | Konservierungsmittel Mergal® K 10 N; Troy Chemie GmbH, Seelze |
| 3,0 g | konz. Ammoniak-Lösung (25 %) |

Hierzu gibt man unter Rühren:

| | |
|---|---|
| 214,4 g | Titandioxid-Pigment Kronos® 2300; Kronos Titan GmbH, Leverkusen |

Die Bestandteile werden für 20 Minuten in einem Hochgeschwindigkeitsdispergator vermischt. Anschließend gibt man folgende Bestandteile unter Rühren zu:

| | |
|---|---|
| 528,3 g | Polymerdispersion A aus I.) bzw. V2 (53,0 gew.-%ig) |
| 113,7 g | Wasser |
| 25,0 g | 30 gew.-%ige wässrige Lösung eines Acrylatverdickers; Mowilith® VDM 7000; Clariant |
| 20,0 g | Wachsdispersion (30 % in Wasser) Südranol® 240; Süddeutsche Emulsions-Chemie GmbH Chemische Fabrik, Mannheim |

Die PVK des lösemittel- und weichmacherfreien Dispersionslackes beträgt 16,8 %. Die Ergebnisse der anwendungstechnischen Prüfung sind in Tabelle 4 zusammengefasst.

Die erfindungsgemäßen Dispersionslacke der Beispiele B2 bis B8 verdeutlichen, dass sich, im Vergleich zu einer aus dem Stand der Technik bekannten, heterogenen Vinylacetat-Ethen-Copolymerdispersion im Dispersionslackbeispiel B1 und einer handelsüblichen homogenen Vinylacetat-Ethen-Copolymerdispersion im Beispiel B9, auf Grund der erfindungsgemäßen Heterogenität und überwiegenden Stabilisierung mit ionischen Komponenten der erfindungsgemäßen Dispersionen A2 bis A8 lösungsmittel- und weichmacherfreie Dispersionslacke herstellen lassen, die sich durch ein deutlich verbessertes anwendungstechnisches Profil, insbesondere erhöhte Blockfestigkeiten sowie zum Teil verbesserte Glanzeigenschaften, auszeichnen.

Tabelle 4:

| Anwendungstechnische Prüfungen der Formulierung I | | | | | |
|---|---|---|---|---|---|
| | | Stabilisierung der Dispersion | | | |
| Dispersionslack | Dispersion | $\Sigma M_5$ a) und $S_2$ b) [%] e) | $\Sigma M_3$ c) und $S_1$ d) [%] e) | Blockfestigkeit | Glanz 20° [Skt] |
| B1 (V f)) | A1 (V1 g)) | 3 | 0,7 | 5 | 53 |
| B2 | A2 | 0 | 2,6 | 2 | 52 |
| B3 | A3 | 0 | 2,6 | 2 | 56 |
| B4 | A4 | 0 | 2,6 | 1 | 50 |
| B5 | A5 | 0 | 2,6 | 3 | 54 |
| B6 | A6 | 0 | 2,6 | 2 | 54 |
| B7 | A7 | 0 | 2,6 | 2 | 56 |
| B8 | A8 | 0 | 2,6 | 1 | 47 |
| B9 (V f)) | V2 g) | - h) | - h) | 5 | 49 |

a) $M_5$: nichtionische Monomere;
b) $S_2$: nichtionische Emulgatoren;
c) $M_3$: ionische Monomere;
d) $S_1$: ionische Emulgatoren;
e) Prozentangaben beziehen sich auf die Gesamtmenge der zur Herstellung der Dispersion eingesetzten Monomere;
f) Vergleichsbeispiel;
g) Vergleichsdispersion;
h) nicht angegeben.

II.2. Lösemittel- und weichmacherfreie Dispersionsfarbe mit einer PVK von 32,6 %; Formulierung (II) (Vergleichsbeispiele C1 und C9, Beispiele C2 bis C8)

In einem Gefäß werden die folgenden Bestandteile vorgelegt:

| | |
|---|---|
| 178,2 g | Wasser |
| 2,0 g | Rheologiehilfsmittel Hydroxyethylcellulose mit einer Viskosität von 6 Pas (bestimmt als 1,9 %ige Lösung in Wasser bei 25°C); Tylose® H 6000 YP2; Clariant |
| 4,1 g | Dispergierhilfsmittel Lopon® 894; BK Guilini Chemie GmbH & Co. OHG |
| 4,1 g | Entschäumer Agitan® 295; Münzing-Chemie GmbH, Heilbronn |
| 2,0 g | Natronlauge (10%) |

(fortgesetzt)

| | |
|---|---|
| 2,0 g | Konservierungsmittel Mergal® K 9 N; Troy Chemie GmbH, Seelze |

Hierzu gibt man unter Rühren:

| | |
|---|---|
| 202,5 g<br>151,9 g | Titandioxid-Pigment Kronos® 2190; Kronos Titan GmbH, Leverkusen<br>Calciumcarbonat, Calcit gefällt 1 µm Calcit mittlere Teilchengröße 1 µm; Omya Carb extra-Cl; Omya GmbH, Köln |

Die Bestandteile werden für 20 Minuten in einem Hochgeschwindigkeitsdispergator vermischt. Anschließend gibt man folgende Bestandteile unter Rühren zu:

| | |
|---|---|
| 453,2 g | Polymerdispersion A aus I.) bzw. V2 (53,0 gew.-%ig) |

Die PVK der lösemittel- und weichmacherfreien Dispersionsfarbe beträgt 32,6 %.
Die Ergebnisse der anwendungstechnischen Prüfung sind in Tabelle 5 zusammengefasst.

Die erfindungsgemäßen Dispersionsfarben der Beispiele C2 bis C8 verdeutlichen, dass sich, im Vergleich zu einer aus dem Stand der Technik bekannten, heterogenen Vinylacetat-Ethen-Copolymerdispersion im Beispiel C1, durch die erfindungsgemäße Heterogenität und überwiegende Stabilisierung mit ionischen Komponenten der erfindungsgemäßen Dispersionen A2 bis A8 lösungsmittel- und weichmacherfreie Dispersionsfarben mit hohen Bindemittelgehalten (PVK = 32,6%) herstellen lassen, die sich durch ein deutlich verbessertes anwendungstechnisches Profil auszeichnen. Besonders hervorzuheben sind dabei die gegenüber Beispiel C1 und C9 verbesserten Blockfestigkeiten, sowie gegenüber C1 verbesserten Glanzeigenschaften der Beispiele C2 bis C8 bei vergleichbaren Abriebeigenschaften.

Tabelle 5:

| Anwendungstechnische Prüfungen der Formulierung II | | | | | | |
|---|---|---|---|---|---|---|
| | | Stabilisierung der Dispersion | | | | |
| Dispersionsfarbe | Dispersion | E $M_5$[a)] und $S_2$[b)] [%][e)] | Σ $M_3$[c)] und $S_1$[d)] [%][e)] | Blockfestigkeit | Abriebfestigkeit | Glanz 60° [Skt] |
| C1 (V[f)]) | A1 (V1[g)]) | 3 | 0,7 | 5 | 1 | 25 |
| C2 | A2 | 0 | 2,6 | 3 | 1 | 29 |
| C3 | A3 | 0 | 2,6 | 2 | 1 | 30 |
| C4 | A4 | 0 | 2,6 | 1 | 2 | 26 |
| C5 | A5 | 0 | 2,6 | 3 | 1 | 30 |
| C6 | A6 | 0 | 2,6 | 2 | 1 | 25 |
| C7 | A7 | 0 | 2,6 | 2 | 1 | 25 |
| C8 | A8 | 0 | 2,6 | 1 | 2 | 26 |
| C9 (V[f)]) | V2[g)] | -[h)] | -[h)] | 5 | 2 | 31 |

a) $M_4$: nichtionische Monomere;
b) $S_2$: nichtionische Emulgatoren;
c) $M_3$: ionische Monomere;
d) $S_1$: ionische Emulgatoren;
e) Prozentangaben beziehen sich auf die Gesamtmenge der zur Herstellung der Dispersion eingesetzten Monomere;
f) Vergleichsbeispiel;
g) Vergleichsdispersion;
h) nicht angegeben.

II.3. Lösemittel- und weichmacherfreie Dispersionsfarbe mit einer PVK von 35,3 %; Formulierung (III) (Vergleichsbeispiele D1 und D9, Beispiele D2 bis D8)

In einem Gefäß werden die folgenden Bestandteile vorgelegt:

| | |
|---|---|
| 186,0 g | Wasser |
| 2,1 g | Rheologiehilfsmittel Hydroxyethylcellulose mit einer Viskosität von 6 Pas (bestimmt als 1,9 %ige Lösung in Wasser bei 25°C); Tylose® H 6000 YP2; Clariant |
| 4,2 g | Dispergierhilfsmittel Lopon® 894; BK Guilini Chemie GmbH & Co. OHG |
| 4,2 g | Entschäumer Agitan® 295; Münzing-Chemie GmbH, Heilbronn |
| 2,1 g | Natronlauge (10 %) |
| 2,1 g | Konservierungsmittel Mergal® K 9 N; Troy Chemie GmbH, Seelze |

Hierzu gibt man unter Rühren:

| | |
|---|---|
| 211,4 g | Titandioxid-Pigment Kronos® 2190; Kronos Titan GmbH, Leverkusen |
| 158,6 g | Calciumcarbonat, Calcit 1 µm Calcit mittlere Teilchengröße 1 µm; Omya Carb extra-Cl; Omya GmbH, Köln |

Die Bestandteile werden für 20 Minuten in einem Hochgeschwindigkeitsdispergator vermischt. Anschließend gibt man folgende Bestandteile unter Rühren zu:

| | |
|---|---|
| 15,9 g | Rheologiehilfsmittel: 20 gew.-%ige wässrige Lösung eines assoziativ verdickenden Polyurethans; Tafigel® PUR 50; Münzing-Chemie GmbH, Heilbronn |
| 420,0 g | Polymerdispersion A aus I.) bzw. V2 (53,0 gew.-%ig) |

Die PVK der lösemittel- und weichmacherfreien Dispersionsfarbe beträgt 35,3 %.
Die Ergebnisse der anwendungstechnischen Prüfung sind in Tabelle 6 zusammengefasst.

Die erfindungsgemäßen Dispersionsfarben der Beispiele D2 bis D8 verdeutlichen, dass sich, im Vergleich zu einer aus dem Stand der Technik bekannten, heterogenen Vinytacetat-Ethen-Copolymerdispersion im Beispiel D1 und einer handelsüblichen homogenen Vinylacetat-Ethen-Copolymerdispersion im Beispiel D9, durch die erfindungsgemäße Heterogenität und überwiegende Stabilisierung mit ionischen Komponenten der erfindungsgemäßen Dispersionen A2 bis A8 lösungsmittel- und weichmacherfreie Dispersionsfarben mit hohen Bindemittelgehalten (PVK = 35,5%) herstellen lassen, die sich durch ein deutlich verbessertes anwendungstechnisches Profil auszeichnen. Besonders hervorzuheben sind dabei die gegenüber Beispiel D1 und D9 verbesserten Blockfestigkeiten, sowie die gegenüber D1 verbesserten Glanzeigenschaften der Beispiele D2 bis D8 bei vergleichbaren Abriebeigenschaften.

Tabelle 6:

| Anwendungstechnische Prüfungen der Formulierung III | | | | | | |
|---|---|---|---|---|---|---|
| | | Stabilisierung der Dispersion | | | | |
| Dispersionsfarbe | Dispersion Σ | $M_5$[a)] und $S_2$[b)] [%][e)] | Σ $M_3$[c)] und $S_1$[d)] [%][e)] | Blockfestigkeit | Abriebfestigkeit | Glanz 60° [Skt] |
| D1 (V [f)]) | A1 (V1 [g)]) | 3 | 0,7 | 5 | 1 | 18 |
| D2 | A2 | 0 | 2,6 | 2 | 1 | 23 |
| D3 | A3 | 0 | 2,6 | 3 | 1 | 23 |
| D4 | A4 | 0 | 2,6 | 1 | 2 | 20 |

a) $M_5$: nichtionische Monomere;
b) $S_2$: nichtionische Emulgatoren;
c) $M_3$: ionische Monomere;
d) $S_1$: ionische Emulgatoren;
e) Prozentangaben beziehen sich auf die Gesamtmenge der zur Herstellung der Dispersion eingesetzten Monomere;
f) Vergleichsbeispiel;
g) Vergleichsdispersion;

Tabelle 6: (fortgesetzt)

| Anwendungstechnische Prüfungen der Formulierung III | | | | | | |
|---|---|---|---|---|---|---|
| | | Stabilisierung der Dispersion | | | | |
| Dispersionsfarbe | Dispersion Σ | $M_5$ a) und $S_2$ b) [%] e) | Σ $M_3$ c) und $S_1$ d) [%] e) | Blockfestigkeit | Abriebfestigkeit | Glanz 60° [Skt] |
| D5 | A5 | 0 | 2,6 | 3 | 1 | 26 |
| D6 | A6 | 0 | 2,6 | 1 | 1 | 20 |
| D7 | A7 | 0 | 2,6 | 2 | 1 | 23 |
| D8 | A8 | 0 | 2,6 | 1 | 2 | 19 |
| D9 (V f)) | V2 g) | - h) | - h) | 5 | 1 | 26 |

a) $M_5$: nichtionische Monomere;
b) $S_2$: nichtionische Emulgatoren;
c) $M_3$: ionische Monomere;
d) $S_1$: ionische Emulgatoren;
e) Prozentangaben beziehen sich auf die Gesamtmenge der zur Herstellung der Dispersion eingesetzten Monomere;
f) Vergleichsbeispiel;
g) Vergleichsdispersion;
h) nicht angegeben.

II.4. Lösemittel- und weichmacherfreie Dispersionsfarbe mit einer PVK von 75,6 %; Formulierung (IV) (Vergleichsbeispiele E1 und E9, Beispiele E2 bis E5)

In einem Gefäß werden die folgenden Bestandteile vorgelegt:

| | |
|---|---|
| 248,0 g | Wasser |
| 3,0 g | Rheologiehilfsmittel Methylhydroxyethylcellulose mit einer Viskosität von 30 Pas (bestimmt als 1,9 %ige Lösung in Wasser bei 25°C); Tylose® MH 30000 YP2; Clariant GmbH, Frankfurt |
| 13,0 g | 10 gew.-%ige Lösung eines Natriumpolyphosphats in Wasser, Calgon®; BK Guilini Chemie GmbH & Co. OHG |
| 3,0 g | Dispergierhilfsmittel Lopon® 894; BK Guilini Chemie GmbH & Co. OHG |
| 4,0 g | Entschäumer Agitan® VP 315; Münzing-Chemie GmbH, Heilbronn |
| 2,0 g | Natronlauge (10%) |
| 4,0 g | Konservierungsmittel Mergal® K 9 N; Troy Chemie GmbH, Seelze |
| 5,0 g | Rheologie-Additiv 10 gew.-%ige wässrige Lösung eines Hectorits; Hectone H; G. M. Langer & Co. GmbH, Ritterhude |

Hierzu gibt man unter Rühren:

| | |
|---|---|
| 100,0 g | Glimmer, 50 µm Glimmer MU-N 85; Ziegler & Co, GmbH, Wunsiedel |
| 100,0 g | Calciumcarbonat, gefällt, 0,3 µm Socal P2; Deutsche Solvay GmbH, Solingen |
| 25,0 g | Aluminium-Silikat, 2,5 µm Kaolin China Clay Grade B; Imerys, St. Austell, Cornwall England |
| 90,0 g | Calciumcarbonat, Calcit 2 µm Calcit mittlere Teilchengröße 2 µm; Omya Carb 2 GU; Omya GmbH, Köln |
| 90,0 g | Calciumcarbonat, Calcit 5 µm Calcit mittlere Teilchengröße 5 µm; Omya Carb 5 GU; Omya GmbH, Köln |
| 185,0 g | Titandioxid-Pigment Kronos® 2160; Kronos Titan GmbH, Leverkusen |

Die Bestandteile werden für 20 Minuten in einem Hochgeschwindigkeitsdispergator vermischt. Anschließend gibt man folgende Bestandteile unter Rühren zu:

| | |
|---|---|
| 130,0 g | Polymerdispersion A aus I.) bzw. V2 (53,0 gew.-%ig) |

Die PVK der lösemittel- und weichmacherfreien Innenfarbe beträgt 75,6 %. Die Ergebnisse der anwendungstechnischen Prüfung sind in Tabelle 7 zusammengefasst.

Die erfindungsgemäßen Beispiele E2 bis E5 machen deutlich, dass die erfindungsgemäßen Dispersionen A2 bis A5, gegenüber einer aus dem Stand der Technik bekannten, heterogenen Vinylacetat-Ethen-Copolymerdispersion A1 und einer handelsüblichen, homogenen Vinylacetat-Ethen-Copolymerdispersion V2, in lösungsmittel- und weichmacherfreien bindemittelreichen Beschichtungssystemen deutlich verbesserte anwendungstechnische Eigenschaften zeigen (siehe Tabellen 3 bis 6), und sich darüber hinaus lösungsmittel- und weichmacherfreie Innenfarben (PVK = 75,6%) herstellen lassen, die in ihren anwendungstechnischen Profilen mit aus dem Stand der Technik bekannten, heterogenen Vinylacetat-Ethen-Copolymerdispersionen (vgl. Beispiel E1) vergleichbar sind.

Tabelle 7:

| Anwendungstechnische Prüfungen der Formulierung IV | | | | | |
|---|---|---|---|---|---|
| | | Stabilisierung der Dispersion | | | |
| Dispersionsfarbe | Dispersion | Σ $M_5$[a)] und $S_2$[b)] [%][e)] | Σ $M_3$[c)] und $S_1$[d)] [%][e)] | Blockfestigkeit | Abriebfestigkeit |
| E1 (V [f)]) | A1 (V1 [g)]) | 3 | 0,7 | 0 | 11 |
| E2 | A2 | 0 | 2,6 | 0 | 10 |
| E3 | A3 | 0 | 2,6 | 0 | 10 |
| E4 | A4 | 0 | 2,6 | 0 | 11 |
| E5 | A5 | 0 | 2,6 | 0 | 11 |
| E6 | A6 | 0 | 2,6 | 0 | 7 |
| E7 | A7 | 0 | 2,6 | 0 | 8 |
| E8 | A8 | 0 | 2,6 | 0 | 8 |
| E9 (V [f)]) | V2 [g)] | - [h)] | - [h)] | 0 | 8 |

a) $M_5$: nichtionische Monomere;
b) $S_2$: nichtionische Emulgatoren;
c) $M_3$: ionische Monomere;
d) $S_1$: ionische Emulgatoren;
e) Prozentangaben beziehen sich auf die Gesamtmenge der zur Herstellung der Dispersion eingesetzten Monomere;
f) Vergleichsbeispiel;
g) Vergleichsdispersion;
h) nicht angegeben.

Darüber hinaus zeigen die erfindungsgemäßen Beispiele E6 bis E8, dass sich mit den erfindungsgemäßen heterogenen, überwiegend durch ionische Komponenten stabilisierten und Silane copolymerisiert enthaltende Dispersionen A6 bis A8, über ihre vorteilhaften Eigenschaften in lösungsmittel- und weichmacherfreien bindemittelreichen Beschichtungssystemen hinaus (siehe Tabellen 3 bis 6), lösungsmittel- und weichmacherfreie Innenfarben herstellen lassen, die gegenüber einer Innenfarbe, die mit einer dem Stand der Technik entsprechenden heterogenen Vinylester-Ethen-Dispersion formuliert wurde (E1), verbesserte Abriebbeständigkeiten aufweisen. Dabei entsprechen diese den Abriebbeständigkeiten, wie sie mit einer handelsüblichen homogenen Vinylester-Ethen-Dispersion (E9) erreicht werden kann.

III. Bestimmung der anwendungstechnischen Eigenschaften

III.1.1 Oberflächenklebrigkeit von getrockneten Dispersionsfilmen

Zur Prüfung der Oberflächenklebrigkeit von aus den Dispersionen A hergestellten getrockneten Dispersionsfilmen werden Glasplatten (5 cm x 20 cm) mit Hilfe einer Kastenrakel mit den entsprechenden Dispersionen beschichtet (Nassschichtdicke: 200 µm). Nach 24 stündigem Trocknen im Normklima (23°C, 50% rel. Luftfeuchtigkeit) wird die Oberflächenklebrigkeit mit Hilfe eines Polyken Probe Tacktesters (TMI) durchgeführt. Dazu wird der Stempel des Tack-Messgeräts bei Normklima mit einem Anpressdruck von $5{,}1 \times 10^4$ N/m$^2$ für 20 Sekunden auf den zu untersuchenden Dispersionsfilm gepresst und nach dieser Zeit mit einer Abreißgeschwindigkeit von 1 cm/sec von der Oberfläche senkrecht fortbewegt. Dabei wird die Kraft ermittelt, die erforderlich ist, um den Stempel von der Oberfläche des Dispersionsfilms zu trennen.

Beurteilung:

Note 1: 0 N/m$^2$; Note 2: 0,01 x $10^4$ bis 2,5 x $10^4$ N/m$^2$; Note 3: 2,51 x $10^4$ bis 5,1 x $10^4$ N/m$^2$; Note 4: 5,11 x $10^4$ bis 7,6 x $10^4$ N/m$^2$; Note 5: 7,61 x $10^4$ bis 10,20 x $10^4$ N/m$^2$; Note 6: >10,20 x $10^4$ N/m$^2$.
Mit steigender Note nimmt somit die Oberflächenklebrigkeit zu.

III.2. Blockfestigkeit von getrockneten, pigmenthaltigen Beschichtungen

Zur Prüfung der Blockfestigkeit der Formulierungen I werden Deckkraftkarten der Firma BYK Malinckrodt oder Fa. Morest mit den entsprechenden Dispersionslacken beschichtet (Nassschichtdicke: 200 µm). Nach 24 stündigem Trocknen bei 50°C werden zwei beschichtete Karten mit ihrer beschichteten Seite aufeinander gelegt und 0,5 Stunden bei Raumtemperatur mit 0,78 x $10^4$ N/m$^2$ belastet. Anschließend wird die Kraft bestimmt, um die beschichteten Karten wieder voneinander zu trennen.

Zur Prüfung der Blockfestigkeit der Formulierungen II, III und IV werden Deckkraftkarten der Firma BYK Malinckrodt oder Fa. Morest mit den entsprechenden Dispersionsfarben beschichtet (Nassschichtdicke: 200 µm). Nach 24 stündigem Trocknen im Normklima (23°C, 50 % rel. Luftfeuchtigkeit) werden zwei beschichtete Karten mit ihrer beschichteten Seite aufeinander gelegt und 0,5 Stunden bei Raumtemperatur mit 3,1 x $10^4$ N/m$^2$ belastet. Anschließend wird die Kraft bestimmt, um die beschichteten Karten wieder voneinander zu trennen.

Beurteilung der Blockfestigkeit der Formulierungen I bis III:

Note 0: 0 N/m$^2$; Note 1: 0,1 x $10^4$ bis 0,8 x $10^4$ N/m$^2$; Note 2: 0,81 x $10^4$ bis 1,6 x $10^4$ N/m$^2$; Note 3: 1,61 x $10^4$ bis 2,4 x $10^4$ N/m$^2$; Note 4: 2,41 x $10^4$ bis 3,20 x $10^4$ N/m$^2$; Note 5: >3,20 x $10^4$ N/m$^2$.
Mit steigender Note nimmt somit die Blockfestigkeit ab.

III.3. Glanz von getrockneten, pigmentierten Beschichtungen

Zur Prüfung des Glanzes werden Deckkraftkarten der Firma BYK Malinckrodt oder Fa. Morest mit den entsprechenden Dispersionsfarben beschichtet (Nassschichtdicke: 200 µm). Nach 24 stündigem Trocknen im Normklima (23°C, 50 % rel. Luftfeuchtigkeit) wird der Glanz dieser Beschichtungen mit einem Labor-Reflektormeter RL (Reflektormesskopf RL) der Firma Dr. Bruno Lange GmbH bei Winkeln von 20°, 60° und 85° bestimmt.
Dabei steigen die Glanzeigenschaften mit zunehmenden Reflektormeterwerten.

III.4. Abriebfestigkeit von getrockneten, pigmentierten Beschichtungen

Die Bestimmung der Abriebfestigkeit für die Farbformulierungen II, III und IV erfolgt nach der Europäischen Norm 13300 mittels einem Scheuerprüfgerät Modell 494 der Fa. Erichsen mit Adaptersatz für Scheuerprüfungen nach ISO 11998. Als standardisiertes Scheuermedium dienen Scheuervtiese (3M Scotch Brite Handpad 7448, Typ S ultra fine) mit Abmessungen von 39 x 90 mm.
Die Dispersionsfarben werden mit einem Filmziehgerät Model 509/1 der Fa. Erichsen mit einem Rakel der Spalthöhe 200µm auf Leneta-Folien aufgebracht. Anschließend werden die Folien unter Normklima (23°C, 50 % rel. Luftfeuchtigkeit) in einem Klimaraum 28 Tage getrocknet. Die Trockenschichtdicke liegt bei etwa 130 µm (Formulierung II), 120 µm (Formulierung III) bzw. 160 µm (Formulierung IV). Aus der beschichteten Leneta-Folie werden Prüfkörper mit 430 mm Länge und mindestens 80 mm Breite geschnitten und gewogen. Nach dem Einspannen der Prüfkörper in die Abriebmaschine wird mit Hilfe eines weichen Pinsels die Waschflüssigkeit (0,25 gew.-%ige Lösung von Natrium-Dodecylbenzolsulfonat in destilliertem Wasser) auf die Oberfläche des Farbfilms aufgebracht. Im Anschluss daran wird das Scheuervlies mit der Waschflüssigkeit getränkt bis das Vliesgewicht inklusive Waschflüssigkeit 3,5 bis 4,5 g beträgt. Nach der Einwirkzeit der aufgepinselten Waschflüssigkeit von 60 Sekunden wird der Farbfilm mit der unbedruckten Seite des getränkten Scheuervlieses für 200 Scheuerzyklen abrasiv belastet.
Sofort nach Beendigung der 200 Scheuerzyklen wird der Prüfkörper mit einem leichten Wasserstrahl von abgeriebenen Teilen gereinigt und im Normklima bis zur Gewichtskonstanz getrocknet. Der Gewichtsverlust wird auf der Analysenwaage bestimmt und als flächennormierter Gewichtsverlust ausgewiesen, der sich bezüglich der abgeriebenen Fläche von 148 cm$^2$ ermitteln lässt, die sich aus der Vliesbreite von 3,9 cm multipliziert mit der Weglänge von 38 cm ergibt.
Beurteilung des flächennormierten Gewichtsverlusts:

Note 0: 0 mg/cm$^2$; Note 1: 0,01 bis 1,0 mg/cm$^2$; Note 2: 1,01 bis 2,0 mg/cm$^2$; Note 3: 2,01 bis 3,0 mg/cm$^2$; Note 4: 3,01 bis 4,0 mg/cm$^2$; Note 5: 4,01 bis 5,0 mg/cm$^2$; Note 6: 5,01 bis 6,0 mg/cm$^2$; Note 7: 6,01 bis 7,0 mg/cm$^2$; Note 8: 7,01 bis 8,0 mg/cm$^2$; Note 9: 8,01 bis 9,0 mg/cm$^2$; Note 10: 9,01 bis 10,0 mg/cm$^2$; Note 11: 10,01 bis 11,0 mg/cm$^2$; Note 12: 11,01 bis 12,0 mg/cm$^2$; Note 13: > 12,0 mg/cm$^2$

Mit steigender Note nimmt somit die Abriebfestigkeit der Beschichtungen ab.

**Patentansprüche**

1. Wässrige Kunststoff-Dispersion auf Basis eines Vinylester-Copolymerisats P erhältlich durch mehrstufige Emulsionspolymerisation mit einem Feststoffgehalt von bis zu 80 Gew.-% und einer Mindestfilmbildetemperatur unterhalb von 20°C, die im wesentlichen durch ionische Komponenten stabilisiert ist, wobei das Vinylester-Copolymerisat P mindestens ein Homo- oder Copolymerisat A und mindestens ein Homo- oder Copolymerisat B enthält, und wobei

   - das Homo- oder Copolymerisat A eine Glasübergangstemperatur im Bereich von 0 bis 20°C und das Homo- oder Copolymerisat B eine Glasübergangstemperatur im Bereich von 20 bis 50°C aufweist, vorausgesetzt, dass sich die Glasübergangstemperaturen der beiden Homo- oder Copolymerisate A und B um mindestens 10 K unterscheiden,
   - die Summe der Anteile der Homo- oder Copolymerisate A und B im Vinylester-Copolymerisat P mindestens 50 Gew.-%, bezogen auf das Copolymerisat P, beträgt,
   - das Gewichtsverhältnis von Homo- oder Copolymerisat A zu Homo- oder Copolymerisat B im Bereich von 95/5 bis 5/95 liegt und
   - die Homo- oder Copolymerisate A und B unabhängig voneinander

     (a) 50 bis 100 Gew.-% mindestens eines Vinylesters von Carbonsäuren mit 1 bis 18 C-Atomen (M1) und
     (b) 0 bis 25 Gew.-% mindestens eines monoethylenisch ungesättigten, gegebenenfalls halogen-substituierten Kohlenwasserstoffs mit 2 bis 4 C-Atomen (M2), bezogen auf die Gesamtmasse der zur Herstellung des jeweiligen Homo- oder Copolymerisats A und B verwendeten Monomere, copolymerisiert enthalten,

   **dadurch gekennzeichnet, dass** sie bezogen auf die Gesamtmasse der zur Herstellung des Vinylester-Copolymerisats P verwendeten Monomere

   - 0 bis 10 Gew.-% mindestens eines ethytenisch ungesättigten, ionischen Monomeren (M3) und
   - 0 bis 5 Gew.-%, an ionischen Emulgatoren (S1) enthält, wobei
   - die Gesamtmasse an ethylenisch ungesättigten, ionischen Monomeren (M3) und ionischen Emulgatoren (S1) mindestens 2 Gew.-% beträgt.

2. Kunststoff-Dispersion gemäß Anspruch 1, **dadurch gekennzeichnet, dass** sie einen Feststoffgehalt aufweist, der im Bereich von 20 bis 80 Gew.-% liegt.

3. Kunststoff-Dispersion gemäß Anspruch 1 oder 2, **dadurch gekennzeichnet, dass** die Summe der Anteile der Homo- oder Copolymerisate A und B im Vinylester-Copolymerisat P 75 bis 100 Gew.-%, bezogen auf die Gesamtmasse des Copolymerisats P, beträgt.

4. Kunststoff-Dispersion gemäß mindestens einem der vorhergehenden Ansprüche, **dadurch gekennzeichnet, dass** sie einen pH-Wert im Bereich von 2 bis 9 aufweist.

5. Kunststoff-Dispersion gemäß mindestens einem der vorhergehenden Ansprüche, **dadurch gekennzeichnet, dass** die Homo- oder Copolymerisate A und/oder B als Vinylester von Carbonsäuren mit 1 bis 18 Kohlenstoffatomen (M1) Vinylester von Carbonsäuren mit 1 bis 8 Kohlenstoffatomen, Vinylester von gesättigten, verzweigten Monocarbonsäuren mit 9, 10 oder 11 Kohlenstoffatomen im Säurerest, Vinylester von längerkettigen, gesättigten und ungesättigten Fettsäuren, Vinylester der Benzoesäure oder der p-tert.-Butylbenzoesäure sowie Gemische derselben polymerisiert enthalten.

6. Kunststoff-Dispersion gemäß mindestens einem der vorhergehenden Ansprüche, **dadurch gekennzeichnet, dass** die Homo- oder Copolymerisate A und/oder B als Vinylester von Carbonsäuren mit 1 bis 18 Kohlenstoffatomen (M1) Vinylacetat polymerisiert enthalten.

7. Kunststoff-Dispersion gemäß mindestens einem der vorhergehenden Ansprüche, **dadurch gekennzeichnet, dass** die Copolymerisate A und/oder B als monoethylenisch ungesättigte Kohlenwasserstoffe mit 2 bis 4 Kohlenstoffatomen (M2) Ethen copolymerisiert enthalten.

**8.** Kunststoff-Dispersion gemäß mindestens einem der vorhergehenden Ansprüche, **dadurch gekennzeichnet, dass** der Anteil an monoethylenisch ungesättigten Kohlenwasserstoffen mit 2 bis 4 Kohlenstoffatomen (M2) im Vinylester-Copolymerisat P, bezogen auf die Gesamtmasse der zur Herstellung des Vinylester-Copolymerisats P verwendeten Monomere, weniger als 20 Gew.-% beträgt.

**9.** Kunststoff-Dispersion gemäß mindestens einem der vorhergehenden Ansprüche, **dadurch gekennzeichnet, dass** die Homo- oder Copolymerisate A und/oder B als ethylenisch ungesättigte, ionische Monomere (M3) ungesättigte Monocarbonsäuren, ungesättigte Dicarbonsäuren oder deren Halbester mit $C_1$-$C_{12}$-Alkanolen, ungesättigte Sulfonsäuren und/oder ungesättigte Phosphonsäuren copolymerisiert enthalten.

**10.** Kunststoff-Dispersion gemäß mindestens einem der vorhergehenden Ansprüche, **dadurch gekennzeichnet, dass** das Vinylester-Copolymerisat P bis zu 5 Gew.-%, bezogen auf die Gesamtmasse der zur Herstellung des Vinylester-Copolymerisats P eingesetzten Monomere, mindestens einer ungesättigten, copolymerisierbaren Silicium-organischen Verbindung (M4) copolymerisiert enthält.

**11.** Kunststoff-Dispersion gemäß Anspruch 10, **dadurch gekennzeichnet, dass** als ungesättigte, copolymerisierbare Silicium-organische Verbindungen (M4) Siloxangruppen enthaltende Monomere der allgemeinen Formel $RSi(CH_3)_{0-2}(OR^1)_{3-1}$ eingesetzt werden, wobei R die Bedeutung $CH_2{=}CR^2\text{-}(CH_2)_{0-1}$ oder $CH_2{=}CR^2CO_2\text{-}(CH_2)_{1-3}$ hat, $R^1$ ein unverzweigter oder verzweigter, gegebenenfalls substituierter Alkylrest mit 3 bis 12 C-Atomen ist, der gegebenenfalls durch eine Ethergruppe unterbrochen sein kann, und $R^2$ für H oder $CH_3$ steht.

**12.** Kunststoff-Dispersion gemäß mindestens einem der vorhergehenden Ansprüche, **dadurch gekennzeichnet, dass** das Vinylester-Copolymerisat P bis zu 5 Gew.-% an ethylenisch ungesättigten, nichtionischen Monomeren (M5), bezogen auf die Gesamtmasse der zur Herstellung des Vinylester-Copolymerisats P eingesetzten Monomere, copolymerisiert enthält.

**13.** Kunststoff-Dispersion gemäß mindestens einem der vorhergehenden Ansprüche, **dadurch gekennzeichnet, dass** das Vinylester-Copolymerisate P bis zu 30 Gew.-% mindestens eines weiteren, ethylenisch ungesättigten Monomeren (M6), bezogen auf die Gesamtmasse der zur Herstellung des Vinylester-Copolymerisats P eingesetzten Monomere, copolymerisiert enthält.

**14.** Kunststoff-Dispersion gemäß mindestens einem der vorhergehenden Ansprüche, **dadurch gekennzeichnet, dass** sie, bezogen auf die Gesamtmasse der zur Herstellung des Vinylester-Copolymerisats P verwendeten Monomere, 0,1 bis 4 Gew.-% an ionischen Emulgatoren (S1) enthält.

**15.** Kunststoff-Dispersion gemäß mindestens einem der vorhergehenden Ansprüche, **dadurch gekennzeichnet, dass** sie als ionische Emulgatoren (S1) anionische Emulgatoren enthält.

**16.** Kunststoff-Dispersion gemäß Anspruch 15, **dadurch gekennzeichnet, dass** sie als anionische Emulgatoren Alkali- und Ammoniumsalze von Alkylsulfaten, Alkylphosphonaten, Schwefelsäurehalbestern oder Phosphorsäuremono- und diestern ethoxylierter Alkanole und ethoxylierter Alkylphenole, von Alkylsulfonsäuren und Alkylarylsulfonsäuren, und/oder Verbindungen der allgemeinen Formel I,

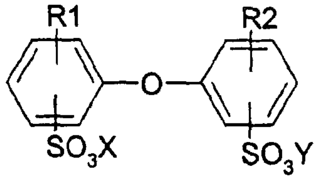

(I)

worin $R^1$ und $R^2$ Wasserstoff oder $C_4$-$C_{24}$-Alkyl bedeuten und nicht gleichzeitig Wasserstoff sind, und X und Y Alkalimetallionen und/oder Ammoniumionen sind, enthält.

**17.** Kunststoff-Dispersion gemäß mindestens einem der vorhergehenden Ansprüche, **dadurch gekennzeichnet, dass** sie nichtionische Emulgatoren (S2) enthält.

**18.** Kunststoff-Dispersion gemäß Anspruch 12 und 17, **dadurch gekennzeichnet, dass** das Verhältnis der Gesamtmenge an ionischen Komponenten (M3) und (S1) zur eingesetzten Gesamtmenge an nichtionischen Komponenten (M5) und (S2) den Wert 1 nicht unterschreitet.

**19.** Verfahren zur Herstellung einer Kunststoff-Dispersion gemäß mindestens einem der vorhergehenden Ansprüche, **dadurch gekennzeichnet, dass** durch wässrige, radikalische Emulsionspolymerisation zunächst Homo- oder Copolymerisat B hergestellt wird und anschließend in der wässrigen Dispersion des Homo- oder Copolymerisats B das Homo- oder Copolymerisat A hergestellt wird.

**20.** Verwendung einer Kunststoff-Dispersion gemäß mindestens einem der Ansprüche 1 bis 18 als wässrige Zubereitung zur Beschichtung von Substraten.

**21.** Verwendung einer Kunststoff-Dispersion gemäß mindestens einem der Ansprüche 1 bis 18 als Bindemittel in pigmenthaStigen, wässrigen Zubereitungen.

**22.** Verwendung einer Kunststoff-Dispersion gemäß mindestens einem der Ansprüche 1 bis 18 als Bindemittel in kunstharzgebundenen Putzen, Fliesenklebern, Anstrichmitteln, Dichtmassen, Versiegelungsmassen oder Papierstreichmassen.

**23.** Verwendung einer Kunststoff-Dispersion gemäß mindestens einem der Ansprüche 1 bis 18 als Bindemittel in Dispersionsfarben.

**24.** Wässrige Zubereitung zur Beschichtung von Substraten, enthaltend eine Kunststoff-Dispersion gemäß mindestens einem der Ansprüche 1 bis 18.

**25.** Pigmenthaltige, wässrige Zubereitung, enthaltend eine Kunststoff-Dispersion gemäß mindestens einem der Ansprüche 1 bis 18.

**26.** Dispersionsfarbe, enthaltend eine Kunststoff-Dispersion gemäß mindestens einem der Ansprüche 1 bis 18.

**27.** Lebensmittelbeschichtung, enthaltend eine Kunststoff-Dispersion gemäß mindestens einem der Ansprüche 1 bis 18.

**28.** Papierstreichmasse, enthaltend eine Kunststoff-Dispersion gemäß mindestens einem der Ansprüche 1 bis 18.

## Claims

**1.** An aqueous plastic material dispersion based on a vinyl ester copolymer P, obtainable by multistage emulsion polymerization, having a solids content of up to 80% by weight and a minimum film formation temperature below 20°C, which is substantially stabilized by ionic components, the vinyl ester copolymer P comprising at least one homo- or copolymer A and at least one homo- or copolymer B, and

- the homo- or copolymer A having a glass transition temperature in the range from 0 to 20°C and the homo- or copolymer B having a glass transition temperature in the range from 20 to 50°C, provided that the glass transition temperatures of the two homo- or copolymers A and B differ by at least 10 K,
- the sum of the amounts of the homo- or copolymers A and B in the vinyl ester copolymer P being at least 50% by weight, based on the copolymer P,
- the weight ratio of homo- or copolymer A to homo- or copolymer B being in the range from 95/5 to 5/95 and
- the homo- or copolymers A and B, independently of one another, containing in the form of copolymerized units

  (a) from 50 to 100% by weight of at least one vinyl ester of carboxylic acids having 1 to 18 C atoms (M1) and
  (b) from 0 to 25% by weight of at least one monoethylenically unsaturated, optionally halogen-substituted hydrocarbon having 2 to 4 C atoms (M2), based on the total mass of the monomers used for the preparation of the respective homo- or copolymer A and B,

which comprises, based on the total mass of the monomers used for the preparation of the vinyl ester copolymer P,

- from 0 to 10% by weight of at least one ethylenically unsaturated, ionic monomer (M3) and
- from 0 to 5% by weight of ionic emulsifiers (S1),
- the total mass of ethylenically unsaturated, ionic monomers (M3) and ionic emulsifiers (S1) being at least 2% by weight.

**2.** The plastic material dispersion as claimed in claim 1, which has a solids content which is in the range of from 20 to 80% by weight.

**3.** The plastic material dispersion as claimed in claim 1 or 2, wherein the sum of the amounts of the homo- or copolymers A and B in the vinyl ester copolymer P is from 75 to 100% by weight, based on the total mass of the copolymer P.

**4.** The plastic material dispersion as claimed in at least one of the preceding claims, which has a pH in the range of from 2 to 9.

**5.** The plastic material dispersion as claimed in at least one of the preceding claims, wherein the homo- or copolymers A and/or B contain, as vinyl esters of carboxylic acids having 1 to 18 carbon atoms (M1) incorporated in the form of polymerized units, vinyl esters of carboxylic acids having 1 to 8 carbon atoms, vinyl esters of saturated, branched, monocarboxylic acids having 9, 10 or 11 carbon atoms in the acid radical, vinyl esters of relatively long-chain, saturated and unsaturated fatty acids, vinyl esters of benzoic acid or of p-tert-butylbenzoic acid and mixtures thereof.

**6.** The plastic material dispersion as claimed in at least one of the preceding claims, wherein the homo- or copolymers A and/or B contain vinyl acetate as vinyl esters of carboxylic acids having 1 to 18 carbon atoms (M1) incorporated in the form of polymerized units.

**7.** The plastic material dispersion as claimed in at least one of the preceding claims, wherein the copolymers A and/or B contain ethene as monoethylenically unsaturated hydrocarbons having 2 to 4 carbon atoms (M2) incorporated in the form of copolymerized units.

**8.** The plastic material dispersion as claimed in at least one of the preceding claims, wherein the amount of monoethylenically unsaturated hydrocarbons having 2 to 4 carbon atoms (M2) in the vinyl ester copolymer P is less than 20% by weight, based on the total mass of the monomers used for the preparation of the vinyl ester copolymer P.

**9.** The plastic material dispersion as claimed in at least one of the preceding claims, wherein the homo- or copolymers A and/or B contain, as ethylenically unsaturated, ionic monomers (M3) incorporated in the form of copolymerized units, unsaturated monocarboxylic acids, unsaturated dicarboxylic acids or the monoesters thereof with $C_1$-$C_{12}$-alkanols, unsaturated sulfonic acids and/or unsaturated phosphonic acids.

**10.** The plastic material dispersion as claimed in at least one of the preceding claims, wherein the vinyl ester copolymer P contains, incorporated as copolymerized units, up to 5% by weight, based on the total mass of the monomers used for the preparation of the vinyl ester copolymer P, at least one unsaturated, copolymerizable organic silicon compound (M4).

**11.** The plastic material dispersion as claimed in claim 10, wherein monomers containing siloxane groups and of the general formula $RSi(CH_3)_{0-2}(OR^1)_{3-1}$, in which R has the meaning $CH_2$=$CR^2$-$(CH_2)_{0-1}$ or $CH_2$=$CR^2CO_2$-$(CH_2)_{1-3}$, $R^1$ is a straight-chain or branched, unsubstituted or substituted alkyl radical having 3 to 12 C atoms, which may be interrupted by an ether group, and $R^2$ is H or $CH_3$, are used as unsaturated, copolymerizable organosilicon compounds (M4).

**12.** The plastic material dispersion as claimed in at least one of the preceding claims, wherein the vinyl ester copolymer P contains, incorporated in the form of copolymerized units, up to 5% by weight of ethylenically unsaturated, nonionic monomers (M5), based on the total mass of the monomers used for the preparation of the vinyl ester copolymer P.

**13.** The plastic material dispersion as claimed in at least one of the preceding claims, wherein the vinyl ester copolymers P contain, incorporated in the form of copolymerized units, up to 30% by weight of at least one further, ethylenically unsaturated monomer (M6), based on the total mass of the monomers used for the preparation of the vinyl ester

copolymer P.

**14.** The plastic material dispersion as claimed in at least one of the preceding claims, which contains from 0.1 to 4% by weight of ionic emulsifiers (S1), based on the total mass of the monomers used for the preparation of the vinyl ester copolymer P.

**15.** The plastic material dispersion as claimed in at least one of the preceding claims, which contains anionic emulsifiers as ionic emulsifiers (S1).

**16.** The plastic material dispersion as claimed in claim 15, which contains alkali metal and ammonium salts of alkylsulfates, alkylphosphonates, sulfuric monoesters or phosphoric mono- and diesters of ethoxylated alkanols and ethoxylated alkylphenols, of alkanesulfonic acids and alkylarylsulfonic acids, and/or compounds of the general formula I

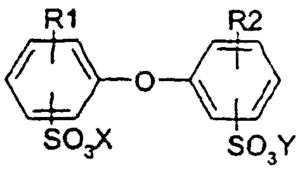

(I)

in which $R^1$ and $R^2$ are hydrogen or $C_4$-$C_{24}$-alkyl and are not simultaneously hydrogen and X and Y are alkali metal ions and/or ammonium ions, as anionic emulsifiers.

**17.** The plastic material dispersion as claimed in at least one of the preceding claims, which contains nonionic emulsifiers (S2).

**18.** The plastic material dispersion as claimed in claims 12 and 17, wherein the ratio of the total amount of ionic components (M3) and (S1) to the total amount of nonionic components (M5) and (S2) used does not fall below the value 1.

**19.** The method for producing a plastic material dispersion as claimed in at least one of the preceding claims, wherein first homo- or copolymer B is prepared by aqueous, free radical emulsion polymerization and then the homo- or copolymer A is prepared in the aqueous dispersion of the homo- or copolymer B.

**20.** The use of a plastic material dispersion as claimed in at least one of claims 1 to 18 as an aqueous formulation for coating substrates.

**21.** The use of a plastic material dispersion as claimed in at least one of claims 1 to 18 as a binder in pigment-containing, aqueous formulations.

**22.** The use of a plastic material dispersion as claimed in at least one of claims 1 to 18 as a binder in synthetic resin-bound renders, tile adhesives, coating materials, joint sealing compounds, sealing compounds or paper coating slips.

**23.** The use of a plastic material dispersion as claimed in at least one of claims 1 to 18 as a binder in emulsion paints.

**24.** An aqueous formulation for coating substrates, comprising a plastic material dispersion as claimed in at least one of claims 1 to 18.

**25.** A pigment-containing, aqueous formulation comprising a plastic material dispersion as claimed in at least one of claims 1 to 18.

**26.** An emulsion paint, comprising a plastic material dispersion as claimed in at least one of claims 1 to 18.

**27.** Food coating, comprising a plastic material dispersion as claimed in at least one of claims 1 to 18.

**28.** A paper coating slip, comprising a plastic material dispersion as claimed in at least one of claims 1 to 18.

## Revendications

**1.** Dispersion aqueuse de matière plastique à base d'un copolymère P d'ester vinylique, pouvant être obtenue par polymérisation en émulsion en plusieurs étapes, avec une teneur en extrait sec allant jusqu'à 80 % en poids et une température minimale de formation du feuil inférieure à 20°C, qui pour l'essentiel est stabilisée par des composants ioniques, le copolymère P d'ester vinylique contenant au moins un homo- ou un copolymère A et au moins un homo- ou un copolymère B, et où

- l'homo- ou le copolymère A a une température de transition vitreuse comprise dans la plage de 0 à 20°C, et l'homo- ou le copolymère B a une température de transition vitreuse comprise dans la plage de 20 à 50°C, à la condition que les températures de transition vitreuse des deux homo- ou copolymères A et B diffèrent d'au moins 10 K,
- la somme des proportions des homo- ou des copolymères A et B dans le copolymère P d'ester vinylique est d'au moins 50 % en poids par rapport au copolymère P,
- le rapport en poids de l'homo- ou du copolymère A à l'homo- ou au copolymère B est compris dans la plage de 95/5 à 5/95, et
- les homo- ou copolymères A et B contiennent copolymérisés, indépendamment l'un de l'autre,

(a) de 50 à 100 % en poids d'au moins un ester vinylique d'acides carboxyliques ayant de 1 à 18 atomes de carbone (M1), et
(b) de 0 à 25 % en poids d'au moins un hydrocarbure à insaturation monoéthylénique, éventuellement halogéné, ayant de 2 à 4 atomes de carbone (M2), par rapport à la masse totale des monomères utilisés pour la préparation de chacun des homo- ou copolymères A et B,

**caractérisée en ce que**, par rapport à la masse totale des monomères utilisés pour la préparation du copolymère P d'ester vinylique, elle contient

- de 0 à 10 % en poids d'au moins un monomère ionique à insaturation éthylénique (M3), et
- de 0 à 5 % en poids d'émulsifiants ioniques (S1),
- la masse totale des monomères ioniques à insaturation éthylénique (M3) et des émulsifiants ioniques (S1) étant d'au moins 2 % en poids.

**2.** Dispersion de matière plastique selon la revendication 1, **caractérisée en ce qu'**elle présente une teneur en extrait sec comprise dans la plage de 20 à 80 % en poids.

**3.** Dispersion de matière plastique selon la revendication 1 ou 2, **caractérisée en ce que** la somme des proportions des homo- ou copolymères A et B dans le copolymère P d'ester vinylique est de 75 à 100 % en poids par rapport à la masse totale du copolymère P.

**4.** Dispersion de matière plastique selon au moins l'une des revendications précédentes, **caractérisée en ce qu'**elle a un pH compris dans la plage de 2 à 9.

**5.** Dispersion de matière plastique selon au moins l'une des revendications précédentes, **caractérisée en ce que** les homo- ou copolymères A et/ou B contiennent polymérisés, en tant qu'ester vinylique d'acides carboxyliques ayant de 1 à 18 atomes de carbone (M1) des esters vinyliques d'acides carboxyliques ayant de 1 à 8 atomes de carbone, des esters vinyliques d'acides monocarboxyliques ramifiés et saturés ayant 9, 10 ou 11 atomes de carbone dans le résidu acide, des esters vinyliques d'acides gras à longue chaîne, saturés et insaturés, des esters vinyliques de l'acide benzoïque ou de l'acide p-tert-butylbenzoïque, ainsi que les mélanges de ceux-ci.

**6.** Dispersion de matière plastique selon au moins l'une des revendications précédentes, **caractérisée en ce que** les homo- ou copolymères A et/ou B contiennent en tant qu'esters vinyliques d'acides carboxyliques ayant de 1 à 18 atomes de carbone (M1) de l'acétate de vinyle.

**7.** Dispersion de matière plastique selon au moins l'une des revendications précédentes, **caractérisée en ce que** les copolymères A et/ou B contiennent copolymérisés, en tant qu'hydrocarbures à insaturation monoéthylénique

ayant de 2 à 4 atomes de carbone (M2), de l'éthène.

**8.** Dispersion de matière plastique selon au moins l'une des revendications précédentes, **caractérisée en ce que** la proportion des hydrocarbures à insaturation monoéthylénique ayant de 2 à 4 atomes de carbone (M2) dans le copolymère P d'ester vinylique, par rapport à la masse totale des monomères utilisés pour la préparation du copolymère P d'ester vinylique, est inférieure à 20 % en poids.

**9.** Dispersion de matière plastique selon au moins l'une des revendications précédentes, **caractérisée en ce que** les homo- ou copolymères A et/ou B contiennent copolymérisés, en tant que monomères ioniques (M3) à insaturation éthylénique, des acides monocarboxyliques insaturés, des acides dicarboxyliques insaturés ou leurs semi-esters avec des alcanols en $C_1$ à $C_{12}$, des acides sulfoniques insaturés et/ou des acides phosphoniques insaturés.

**10.** Dispersion de matière plastique selon au moins l'une des revendications précédentes, **caractérisée en ce que** le copolymère P d'ester vinylique contient copolymérisés jusqu'à 5 % en poids, par rapport à la masse totale des monomères utilisés pour la préparation du copolymère P d'ester vinylique, d'au moins un composé organique du silicium (M4), insaturé et copolymérisable.

**11.** Dispersion de matière plastique selon la revendication 10, **caractérisée en ce que** l'on utilise en tant que composés (M4) organiques du silicium, copolymérisables et insaturés, des monomères contenant des groupes siloxane de formule générale $RSi(CH_3)_{0-2}(OR^1)_{3-1}$, où R désigne $CH_2=CR^2-(CH_2)_{0-1}$ ou $CH_2=CR^2CO_2-(CH_2)_{1-3}$, $R^1$ étant un radical alkyle à chaîne linéaire ou ramifiée, éventuellement substitué, ayant de 3 à 12 atomes de carbone, et qui peut éventuellement être interrompu par un groupe éther, et $R^2$ est H ou $CH_3$.

**12.** Dispersion de matière plastique selon au moins l'une des revendications précédentes, **caractérisée en ce que** le copolymère P d'ester vinylique contient copolymérisés jusqu'à 5 % en poids de monomères non-ioniques à insaturation éthylénique (M5), par rapport à la masse totale des monomères utilisés pour la préparation du copolymère P d'ester vinylique.

**13.** Dispersion de matière plastique selon au moins l'une des revendications précédentes, **caractérisée en ce que** le copolymère P d'ester vinylique contient copolymérisés jusqu'à 30 % en poids d'au moins un autre monomère à insaturation éthylénique (M6), par rapport à la masse totale des monomères utilisés pour la préparation du copolymère P d'ester vinylique.

**14.** Dispersion de matière plastique selon au moins l'une des revendications précédentes, **caractérisée en ce qu'**elle contient, par rapport à la masse totale des monomères utilisés pour la préparation du copolymère P d'ester vinylique, de 0,1 à 4 % en poids d'émulsifiants ioniques (S1).

**15.** Dispersion de matière plastique selon au moins l'une des revendications précédentes, **caractérisée en ce qu'**elle contient en tant qu'émulsifiants ioniques (S1) des émulsifiants anioniques.

**16.** Dispersion de matière plastique selon la revendication 15, **caractérisée en ce qu'**elle contient en tant qu'émulsifiants anioniques des sels d'ammonium et de métaux alcalins d'alkylsulfates, d'alkylphosphonates, de semi-esters d'acide sulfurique ou de mono- ou diesters d'acides phosphoriques d'alcanols éthoxylés et d'alkylphénols éthoxylés, d'acides alkylsulfoniques et d'acides alkylarylsulfoniques, et/ou leurs composés de Formule générale I

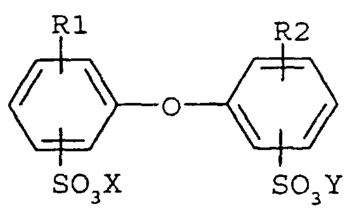

(I)

dans laquelle $R^1$ et $R^2$ sont des atomes d'hydrogène ou des groupes alkyle en $C_4$ à $C_{24}$ et ne représentent pas simultanément des atomes d'hydrogène, et X et Y sont des ions de métaux alcalins et/ou des ions ammonium.

**17.** Dispersion de matière plastique selon au moins l'une des revendications précédentes, **caractérisée en ce qu'**elle contient des émulsifiants non-ioniques (S2).

**18.** Dispersion de matière plastique selon les revendications 12 et 17, **caractérisée en ce que** la proportion entre la quantité totale des composants ioniques (M3) et (S1) et la quantité totale utilisée de composants non-ioniques (M5) et (S2), ne passe pas en dessous de 1.

**19.** Procédé de préparation d'une dispersion de matière plastique selon au moins l'une des revendications précédentes, **caractérisé en ce qu'**on prépare d'abord l'homo- ou le copolymère B par polymérisation radicalaire en émulsion aqueuse, puis on prépare l'homo- ou le copolymère A dans la dispersion aqueuse de l'homo- ou du copolymère B.

**20.** Utilisation d'une dispersion de matière plastique selon au moins l'une des revendications 1 à 18 en tant que préparation aqueuse pour revêtir des substrats.

**21.** Utilisation d'une dispersion de matière plastique selon au moins l'une des revendications 1 à 18 en tant que liant dans des préparations pigmentaires aqueuses.

**22.** Utilisation d'une dispersion de matière plastique selon au moins l'une des revendications 1 à 18 en tant que liant dans des enduits, des colles pour carreaux de sol, des peintures, des masses d'étanchéité, des masses d'obturation ou des masses de couchage du papier, liés par une résine synthétique.

**23.** Utilisation d'une dispersion de matière plastique selon au moins l'une des revendications 1 à 18 en tant que liant dans des peintures émulsions.

**24.** Préparation aqueuse pour revêtir des substrats, contenant une dispersion de matière plastique selon au moins l'une des revendications 1 à 18.

**25.** Préparation pigmentaire aqueuse contenant une dispersion de matière plastique selon au moins l'une des revendications 1 à 18.

**26.** Peinture émulsions contenant une dispersion de matière plastique selon au moins l'une des revendications 1 à 18.

**27.** Revêtement pour produits alimentaires, contenant une dispersion de matière plastique selon au moins l'une des revendications 1 à 18.

**28.** Masse de couchage du papier, contenant une dispersion de matière plastique selon au moins l'une des revendications 1 à 18.